# EUROPEAN PATENT APPLICATION

(11) **EP 4 339 777 A1**
(43) Date of publication of application: **20.03.2024**
(21) Application number: 23197291.0
(22) Date of filing: 14.09.2023
(51) Int. Cl.: G06F 9/50

(54) **SYSTEMS AND METHODS FOR AUTOMATICALLY SCALING CLUSTERS OR APPLICATIONS IN A CLOUD ENVIRONMENT**

(30) Priority: 15.09.2022 WO PCT/GR2022/000048; 17.10.2022 US 202217967388
(71) Applicant: Citrix Systems Inc., Fort Lauderdale, FL 33309 (US)
(72) Inventor: PANITSAS, George, Fort Lauderdale, 33309 (US); YIN, Ruoxuan, Fort Lauderdale, 33309 (US); ZHANG, Zhongshuai, Fort Lauderdale, 33309 (US); HE, Yonglin, Fort Lauderdale, 33309 (US); KONDURU, Pranav, Fort Lauderdale, 33309 (US)
(74) Representative: Müller-Boré & Partner Patentanwälte PartG mbB

(57) **Abstract**

Described embodiments provide systems and methods for automatic cluster scaling. A processor can receive a metric of a first metric type for a cluster of computing devices and an identification of a version of an application and. The processor can aggregate a metric of the first metric type for the version of the application and the metric for the cluster of computing devices to establish an third metric. The processor can determine the third metric exceeds a threshold for the first metric type for the cluster of computing devices, the threshold proportional to a capacity of the cluster of computing devices for the first metric type. The processor can increase a size of the cluster of computing devices.

## Description

### FIELD OF THE DISCLOSURE

The present application generally relates to automatically scaling clusters of computing devices or applications. In particular, this technical solution can employ a variety of methods to scale clusters of computing devices prior to an application deployment and/or to monitor the performance of the clusters or deployed application for dynamic scaling over time.

### BACKGROUND

Clusters of servers or computing devices may use parallel processing techniques to provide a remote analytics service and/or machine learning techniques to make decisions in a cloud environment. As applications are added to a cluster of servers for processing, performance of the cluster may degrade from a lack of memory or other processing resources to execute each of the applications. Such degradation may result in execution failures or failures to generate requested data within defined time windows.

### SUMMARY

This Summary is provided to introduce a selection of concepts in a simplified form that are further described below in the Detailed Description. This Summary is not intended to identify key features or essential features, nor is it intended to limit the scope of the claims included herewith.

Implementations of the systems and methods discussed herein provide for a preprocessing and monitoring process that enables a server (e.g., a remote server) to scale clusters of computing devices or servers in real-time to enable the clusters to be capable of downloading and executing new applications. The server may determine whether a cluster has the processing capacity to store and process a new version of an application (e.g., a new application or an updated version of an application the cluster is already storing and processing) prior to deploying the new version of the application to the computers of the cluster. The server may do so by collecting metrics such as current memory utilization and/or a value of central processing unit (CPU) utilization of the cluster. The server may determine whether the cluster has the capacity to store and process the new version of the application at the cluster based on the received metrics from the cluster and metrics of the new version of the application. Responsive to determining the cluster does not have the capacity for the new version of the application, the server may increase the size of the cluster, such as by adding a new computing device to the cluster, to cause the cluster to have the capacity to store and process the new version of the application.

The server may additionally monitor the performance of applications being processed at the cluster. For example, as the cluster of computers is executing the applications stored at the cluster, the server may retrieve metrics (e.g., pending jobs, memory utilization, vcore utilization, etc.) and cross-application metrics (e.g., start-up delay, failures, timeouts, out of speed triggers, etc.) indicating characteristics of performance of the cluster of computing devices overall and/or for individual applications. The metrics may be or include numerical values. Responsive to determining one of the applications is not performing as expected (e.g., a metric of the application is above a failure threshold), the server may reconfigure (e.g., automatically reconfigure) the cluster to have the capacity to process the application or reconfigure the application to require fewer memory resources or otherwise address the problem. In this way, the server may reduce latency and problems that the cluster may encounter when processing applications, including when doing so using parallel processing techniques.

At least one aspect of this technical solution is directed to a method. The method may include receiving, by a processor, a first metric of a first metric type for a cluster of computing devices and an identification of a version of an application; determining, by the processor, a third metric as a function of a second metric of the first metric type for the version of the application and the first metric for the cluster of computing devices; determining, by the processor, the third metric exceeds a threshold for the first metric type for the cluster of computing devices, the threshold proportional to a capacity of the cluster of computing devices for the first metric type; and responsive to the determination, increasing, by the processor, a size of the cluster of computing devices.

In some implementations, increasing the size of the cluster comprises increasing, by the processor, the size of the cluster such that the threshold of the cluster of computing devices is at least equal to the third metric. In some implementations, calculating, by the processor, a difference between the third metric and the threshold; and calculating, by the processor, a number of computing devices to add to the cluster of computing devices based on the difference, wherein increasing the size of the cluster comprises adding, by the processor, the calculated number of computing devices to the cluster.

In some implementations, the method further comprises responsive to increasing the size of the cluster, deploying, by the processor, the version of the application to each computing device of the cluster of computing devices, receipt of the version of the application causing each computing device of the cluster to download the version of the application. In some implementations, obtaining the first metric of the first metric type for the cluster of computing devices comprises receiving, by the processor, a value of memory utilization or a value of central processing unit (CPU) utilization of the cluster of computing devices.

In some implementations, the method further comprises receiving, by the processor, a plurality of metrics of the first metric type or a second metric type for the cluster of computing devices; calculating, by the processor, an average of the plurality of metrics; determining, by the processor, the average of the plurality of metrics exceeds a second threshold for the first metric type or the second metric type; and responsive to determining the average exceeds the second threshold, increasing, by the processor, the size of the cluster of computing devices. In some implementations, the method further comprises receiving, by the processor, a second plurality of metrics for the first metric type or the second metric type for the cluster of computing devices for a second time period prior to a time period associated with the plurality of metrics; and calculating, by the processor, the second threshold based on the metrics of the second plurality of metrics.

In some implementations, the method further comprises receiving, by the processor, a plurality of metrics of a second metric type corresponding to the application executing on the cluster of computing devices; calculating, by the processor, an average of the plurality of metrics; determining, by the processor, the average exceeds a second threshold for the second metric type; and responsive to determining the average exceeds the second threshold, increasing, by the processor, the size of the cluster of computing devices. In some implementations, receiving the plurality of metrics of the second metric type corresponding to the application comprises receiving, by the processor, metrics for one of start-up delays, failures, timeouts, or out of speed triggers of the application executing on the cluster of computing devices.

In some implementations, the method further comprises receiving, by the processor, a plurality of metrics of a second metric type corresponding to the application executing on the cluster of computing devices; calculating, by the processor, an average of the plurality of metrics; determining, by the processor, the average exceeds a second threshold for the second metric type; and responsive to determining the average exceeds the second threshold, adjusting, by the processor, a configuration of the application. In some implementations, adjusting the configuration of the application comprises increasing or decreasing, by the processor, a driver or executor memory allocation of the application at each computing device of the cluster of computing devices. In some implementations, the method further comprises determining, by the processor, to adjust the configuration of the application instead of adjusting the size of the cluster of computing devices based on the second metric type.

In some implementations, the method further comprises receiving, by a processor, a plurality of metrics of a plurality of metric types for the cluster of computing devices and a second identification of a second version of a second application; applying, by the processor, one or more rules to the plurality of metrics; determining, by the processor, to increase the size of the cluster of computing devices based on the plurality of metrics satisfying at least one rule of the one or more rules; and increasing, by the processor, the size of the cluster responsive to determining to increase the size of the cluster. In some implementations, the method further comprises receiving, by the processor, a plurality of metrics of the first metric type or a second metric type for the cluster of computing devices; calculating, by the processor, an average of the plurality of metrics; determining, by the processor, the average of the plurality of metrics is less than a second threshold for the first metric type or the second metric type; and responsive to determining the average exceeds the threshold, decreasing, by the processor, the size of the cluster of computing devices.

In another aspect, the present solution is directed to a system. The system may include a computing device comprising a processor coupled to memory and a network interface, the processor configured to receive a metric of a first metric type for a cluster of computing devices and an identification of a version of an application; determine a third metric as a function of the first metric of the first metric type and a second metric of the version of the application; determine the third metric exceeds a threshold for the first metric type for the cluster of computing devices, the threshold proportional to a capacity of the cluster of computing devices for the first metric type; and responsive to the determination, increase a size of the cluster of computing devices. In some implementations, the processor is further configured to calculate a difference between the third metric and the threshold; and calculate a number of computing devices to add to the cluster of computing devices based on the difference, wherein the processor is configured to increase the size of the cluster by adding the calculated number of computing devices to the cluster.

In another aspect, the present solution is directed to a method. The method may include receiving, by a processor, a plurality of metrics of a metric type corresponding to an application executing on a cluster of computing devices; determining, by the processor, a first metric as a function of the plurality of metrics; determining, by the processor, the first metric exceeds a threshold for the metric type; and responsive to determining the first metric exceeds the threshold, adjusting, by the processor, a configuration of the application at each computing device of the cluster of computing devices. In some implementations, adjusting the configuration of the application comprises increasing or decreasing, by the processor, a driver or executor memory allocation for the application at each computing device of the cluster of computing devices.

In some implementations, adjusting the configuration of the application comprises increasing or decreasing, by the processor, an executor allocation for the application at each computing device of the cluster of computing devices. In some implementations, the method further includes determining, by the processor, to adjust the configuration of the application instead of adjusting a size of the cluster of computing devices based on the metric type.

### BRIEF DESCRIPTION OF THE DRAWING FIGURES

Objects, aspects, features, and advantages of embodiments disclosed herein will become more fully apparent from the following detailed description, the appended claims, and the accompanying drawing figures in which like reference numerals identify similar or identical elements. Reference numerals that are introduced in the specification in association with a drawing figure may be repeated in one or more subsequent figures without additional description in the specification in order to provide context for other features, and not every element may be labeled in every figure. The drawing figures are not necessarily to scale, emphasis instead being placed upon illustrating embodiments, principles and concepts. The drawings are not intended to limit the scope of the claims included herewith.
FIG. 1A is a block diagram of a network computing system, in accordance with an illustrative embodiment;
FIG. 1B is a block diagram of a network computing system for delivering a computing environment from a server to a client via an appliance, in accordance with an illustrative embodiment;
FIG. 1C is a block diagram of a computing device, in accordance with an illustrative embodiment;
FIG. 2 is a block diagram of an appliance for processing communications between a client and a server, in accordance with an illustrative embodiment;
FIG. 3 is a block diagram of a virtualization environment, in accordance with an illustrative embodiment;
FIG. 4 is a block diagram of a cluster system, in accordance with an illustrative embodiment;
FIG. 5 is a block diagram of a system for automatically scaling clusters or applications in a cloud environment, in accordance with an illustrative embodiment;
FIG. 6 is a flow diagram of a method for automatically scaling clusters or applications in a cloud environment, in accordance with an illustrative embodiment;
FIG. 7 is a block diagram of a system for automatically scaling clusters or applications in a cloud environment, in accordance with an illustrative embodiment;
FIG. 8 is a sequence diagram of a sequence for automatically scaling clusters in a cloud environment, in accordance with an illustrative embodiment;
FIG. 9 is a sequence diagram of a sequence for automatically scaling applications in a cloud environment, in accordance with an illustrative embodiment; and
FIG. 10 is example code of a cluster scale-out policy and an application scale-out policy, in accordance with an illustrative embodiment.

### DETAILED DESCRIPTION

For purposes of reading the description of the various embodiments below, the following descriptions of the sections of the specification and their respective contents may be helpful:

Section A describes a network environment and computing environment which may be useful for practicing embodiments described herein;

Section B describes embodiments of systems and methods for delivering a computing environment to a remote user;

Section C describes embodiments of systems and methods for virtualizing an application delivery controller;

Section D describes embodiments of systems and methods for providing a clustered appliance architecture environment; and

Section E describes embodiments of systems and methods for automatic cluster and application scaling.

### A. Network and Computing Environment

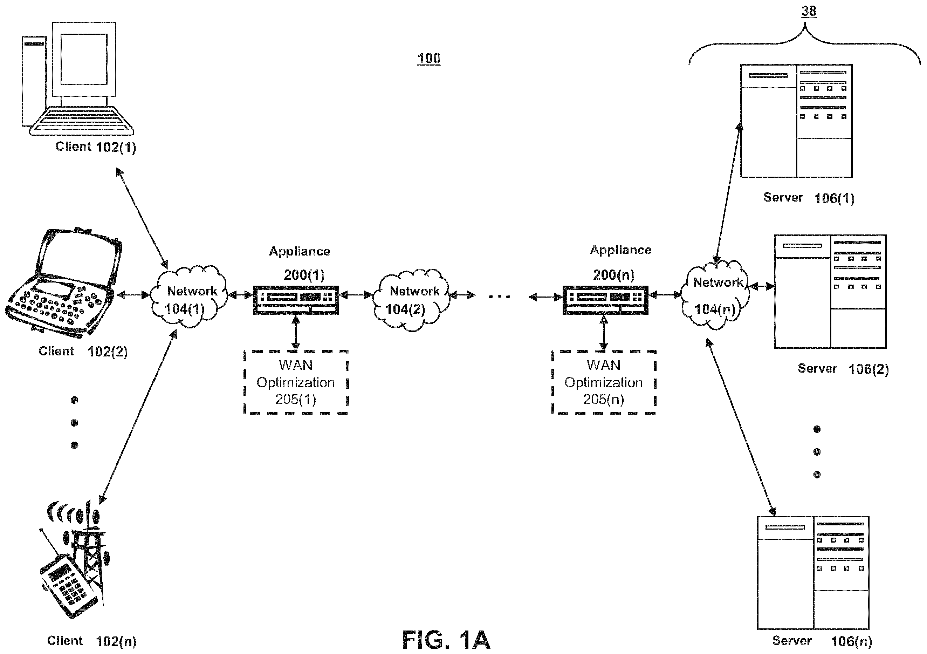

Referring to FIG. 1A, an illustrative network environment 100 is depicted. Network environment 100 may include one or more clients 102(1)-102(n) (also generally referred to as local machine(s) 102 or client(s) 102) in communication with one or more servers 106(1)-106(n) (also generally referred to as remote machine(s) 106 or server(s) 106) via one or more networks 104(1)-104n (generally referred to as network(s) 104). In some implementations, a client 102 may communicate with a server 106 via one or more appliances 200(1)-200n (generally referred to as appliance(s) 200 or gateway(s) 200).

Although the embodiment shown in FIG. 1A shows one or more networks 104 between clients 102 and servers 106, in other embodiments, clients 102 and servers 106 may be on the same network 104. The various networks 104 may be the same type of network or different types of networks. For example, in some implementations, network 104(1) may be a private network such as a local area network (LAN) or a company Intranet, while network 104(2) and/or network 104(n) may be a public network, such as a wide area network (WAN) or the Internet. In other embodiments, both network 104(1) and network 104(n) may be private networks. Networks 104 may employ one or more types of physical networks and/or network topologies, such as wired and/or wireless networks, and may employ one or more communication transport protocols, such as transmission control protocol (TCP), internet protocol (IP), user datagram protocol (UDP) or other similar protocols.

As shown in FIG. 1A, one or more appliances 200 may be located at various points or in various communication paths of network environment 100. For example, appliance 200 may be deployed between two networks 104(1) and 104(2), and appliances 200 may communicate with one another to work in conjunction to, for example, accelerate network traffic between clients 102 and servers 106. In other embodiments, the appliance 200 may be located on a network 104. For example, appliance 200 may be implemented as part of one of clients 102 and/or servers 106. In an embodiment, appliance 200 may be implemented as a network device such as Citrix networking (formerly NetScaler^{®}) products sold by Citrix Systems, Inc. of Fort Lauderdale, FL.

As shown in FIG. 1A, one or more servers 106 may operate as a server farm 38. Servers 106 of server farm 38 may be logically grouped, and may either be geographically co-located (e.g., on premises) or geographically dispersed (e.g., cloud based) from clients 102 and/or other servers 106. In an embodiment, server farm 38 executes one or more applications on behalf of one or more of clients 102 (e.g., as an application server), although other uses are possible, such as a file server, gateway server, proxy server, or other similar server uses. Clients 102 may seek access to hosted applications on servers 106.

As shown in FIG. 1A, in some implementations, appliances 200 may include, be replaced by, or be in communication with, one or more additional appliances, such as WAN optimization appliances 205(1)-205(n), referred to generally as WAN optimization appliance(s) 205. For example, WAN optimization appliance 205 may accelerate, cache, compress or otherwise optimize or improve performance, operation, flow control, or quality of service of network traffic, such as traffic to and/or from a WAN connection, such as optimizing Wide Area File Services (WAFS), accelerating Server Message Block (SMB) or Common Internet File System (CIFS). In some implementations, appliance 205 may be a performance enhancing proxy or a WAN optimization controller. In one embodiment, appliance 205 may be implemented as Citrix SD-WAN products sold by Citrix Systems, Inc. of Fort Lauderdale, FL.

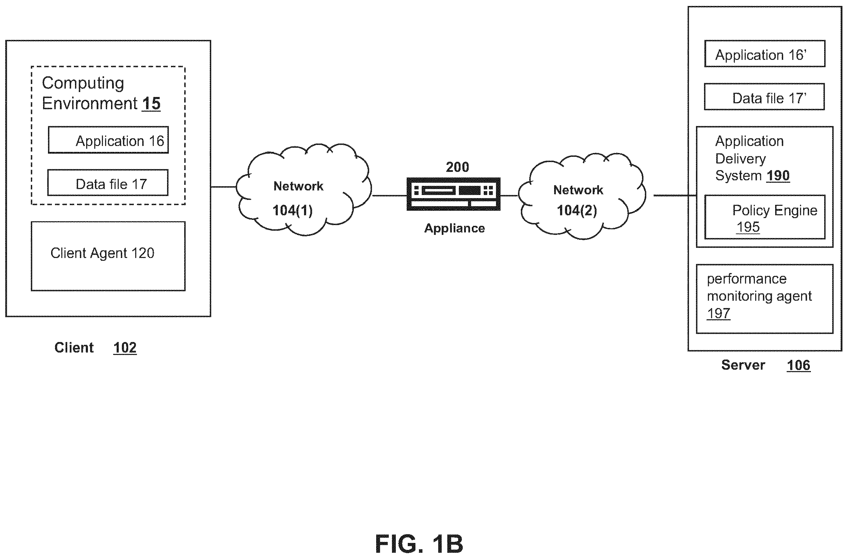

Referring to FIG. 1B, an example network environment, 100', for delivering and/or operating a computing network environment on a client 102 is shown. As shown in FIG. 1B, a server 106 may include an application delivery system 190 for delivering a computing environment, application, and/or data files to one or more clients 102. Client 102 may include client agent 120 and computing environment 15. Computing environment 15 may execute or operate an application, 16, that accesses, processes or uses a data file 17. Computing environment 15, application 16 and/or data file 17 may be delivered via appliance 200 and/or the server 106.

Appliance 200 may accelerate delivery of all or a portion of computing environment 15 to a client 102, for example by the application delivery system 190. For example, appliance 200 may accelerate delivery of a streaming application and data file processable by the application from a data center to a remote user location by accelerating transport layer traffic between a client 102 and a server 106. Such acceleration may be provided by one or more techniques, such as: 1) transport layer connection pooling, 2) transport layer connection multiplexing, 3) transport control protocol buffering, 4) compression, 5) caching, or other techniques. Appliance 200 may also provide load balancing of servers 106 to process requests from clients 102, act as a proxy or access server to provide access to the one or more servers 106, provide security and/or act as a firewall between a client 102 and a server 106, provide Domain Name Service (DNS) resolution, provide one or more virtual servers or virtual internet protocol servers, and/or provide a secure virtual private network (VPN) connection from a client 102 to a server 106, such as a secure socket layer (SSL) VPN connection and/or provide encryption and decryption operations.

Application delivery system 190 may deliver computing environment 15 to a user (e.g., client 102), remote or otherwise, based on authentication and authorization policies applied by policy engine 195. A remote user may obtain a computing environment and access to server stored applications and data files from any network-connected device (e.g., client 102). For example, appliance 200 may request an application and data file from server 106. In response to the request, application delivery system 190 and/or server 106 may deliver the application and data file to client 102, for example via an application stream to operate in computing environment 15 on client 102, or via a remote-display protocol or otherwise via remote-based or server-based computing. In an embodiment, application delivery system 190 may be implemented as any portion of the Citrix Workspace Suite^{™} by Citrix Systems, Inc., such as Citrix DaaS^{™} (formerly Citrix Virtual Apps and Desktops, XenApp^{®}, and XenDesktop^{®}).

Policy engine 195 may control and manage the access to, and execution and delivery of, applications. For example, policy engine 195 may determine the one or more applications a user or client 102 may access and/or how the application should be delivered to the user or client 102, such as a server-based computing, streaming or delivering the application locally to the client agent 120 for local execution.

For example, in operation, a client 102 may request execution of an application (e.g., application 16') and application delivery system 190 of server 106 determines how to execute application 16', for example based upon credentials received from client 102 and a user policy applied by policy engine 195 associated with the credentials. For example, application delivery system 190 may enable client 102 to receive application-output data generated by execution of the application on a server 106, may enable client 102 to execute the application locally after receiving the application from server 106, or may stream the application via network 104 to client 102. For example, in some implementations, the application may be a server-based or a remote-based application executed on server 106 on behalf of client 102. Server 106 may display output to client 102 using a thin-client or remote-display protocol, such as the Independent Computing Architecture (ICA) protocol by Citrix Systems, Inc. of Fort Lauderdale, FL. The application may be any application related to real-time data communications, such as applications for streaming graphics, streaming video and/or audio or other data, delivery of remote desktops or workspaces or hosted services or applications, for example infrastructure as a service (IaaS), desktop as a service (DaaS), workspace as a service (WaaS), software as a service (SaaS) or platform as a service (PaaS).

One or more of servers 106 may include a performance monitoring service or agent 197. In some implementations, a dedicated one or more servers 106 may be employed to perform performance monitoring. Performance monitoring may be performed using data collection, aggregation, analysis, management and reporting, for example by software, hardware or a combination thereof. Performance monitoring may include one or more agents for performing monitoring, measurement and data collection activities on clients 102 (e.g., client agent 120), servers 106 (e.g., agent 197) or an appliance 200 and/or 205 (agent not shown). In general, monitoring agents (e.g., 120 and/or 197) execute transparently (e.g., in the background) to any application and/or user of the device. In some implementations, monitoring agent 197 includes any of the product embodiments referred to as Citrix Analytics or Citrix Application Delivery Management by Citrix Systems, Inc. of Fort Lauderdale, FL.

The monitoring agents 120 and 197 may monitor, measure, collect, and/or analyze data on a predetermined frequency, based upon an occurrence of given event(s), or in real time during operation of network environment 100. The monitoring agents 120 and 197 may monitor resource consumption and/or performance of hardware, software, and/or communications resources of clients 102, networks 104, appliances 200 and/or 205, and/or servers 106. For example, network connections such as a transport layer connection, network latency, bandwidth utilization, end-user response times, application usage and performance, session connections to an application, cache usage, memory usage, processor usage, storage usage, database transactions, client and/or server utilization, active users, duration of user activity, application crashes, errors, or hangs, the time required to log-in to an application, a server, or the application delivery system, and/or other performance conditions and metrics may be monitored.

The monitoring agents 120 and 197 may provide application performance management for application delivery system 190. For example, based upon one or more monitored performance conditions or metrics, application delivery system 190 may be dynamically adjusted, for example periodically or in real-time, to optimize application delivery by servers 106 to clients 102 based upon network environment performance and conditions.

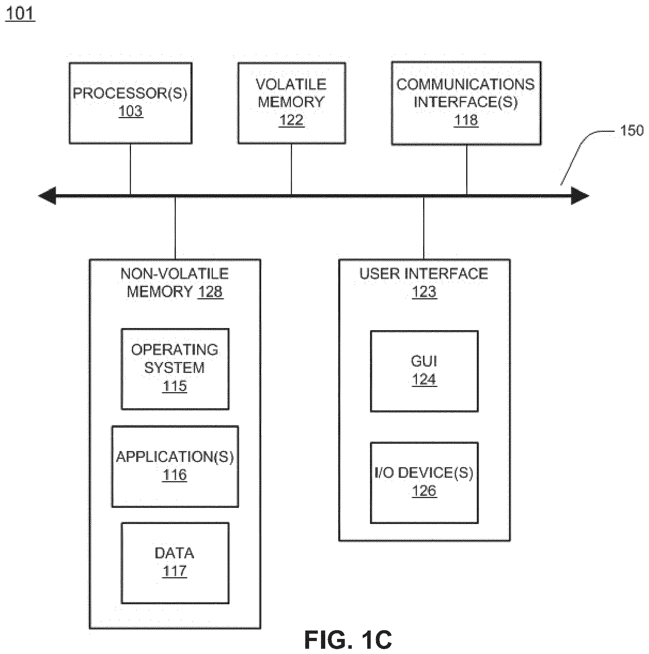

In described embodiments, clients 102, servers 106, and appliances 200 and 205 may be deployed as and/or executed on any type and form of computing device, such as any desktop computer, laptop computer, or mobile device capable of communication over at least one network and performing the operations described herein. For example, clients 102, servers 106 and/or appliances 200 and 205 may each correspond to one computer, a plurality of computers, or a network of distributed computers such as computer 101 shown in FIG. 1C.

As shown in FIG. 1C, computer 101 may include one or more processors 103, volatile memory 122 (e.g., RAM), non-volatile memory 128 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 123, one or more communications interfaces 118, and communication bus 150. User interface 123 may include graphical user interface (GUI) 124 (e.g., a touchscreen, a display, etc.) and one or more input/output (I/O) devices 126 (e.g., a mouse, a keyboard, etc.). Non-volatile memory 128 stores operating system 115, one or more applications 116, and data 117 such that, for example, computer instructions of operating system 115 and/or applications 116 are executed by processor(s) 103 out of volatile memory 122. Data may be entered using an input device of GUI 124 or received from I/O device(s) 126. Various elements of computer 101 may communicate via communication bus 150. Computer 101 as shown in FIG. 1C is shown merely as an example, as clients 102, servers 106 and/or appliances 200 and 205 may be implemented by any computing or processing environment and with any type of machine or set of machines that may have suitable hardware and/or software capable of operating as described herein.

Processor(s) 103 may be implemented by one or more programmable processors executing one or more computer programs to perform the functions of the system. As used herein, the term "processor" describes an electronic circuit that performs a function, an operation, or a sequence of operations. The function, operation, or sequence of operations may be hard coded into the electronic circuit or soft coded by way of instructions held in a memory device. A "processor" may perform the function, operation, or sequence of operations using digital values or using analog signals. In some implementations, the "processor" can be embodied in one or more application specific integrated circuits (ASICs), microprocessors, digital signal processors, microcontrollers, field programmable gate arrays (FPGAs), programmable logic arrays (PLAs), multi-core processors, or general-purpose computers with associated memory. The "processor" may be analog, digital or mixed-signal. In some implementations, the "processor" may be one or more physical processors or one or more "virtual" (e.g., remotely located or "cloud") processors.

Communications interfaces 118 may include one or more interfaces to enable computer 101 to access a computer network such as a LAN, a WAN, or the Internet through a variety of wired and/or wireless or cellular connections.

In described embodiments, computer 101 may execute an application on behalf of a user of a client computing device (e.g., a client 102), may execute a virtual machine, which provides an execution session within which applications execute on behalf of a user or a client computing device (e.g., a client 102), such as a hosted desktop session, may execute a terminal services session to provide a hosted desktop environment, or may provide access to a computing environment including one or more of: one or more applications, one or more desktop applications, and one or more desktop sessions in which one or more applications may execute.

Additional details of the implementation and operation of network environment 100, clients 102, servers 106, and appliances 200 and 205 may be as described in U.S. Patent number 9,538,345, issued January 3, 2017 to Citrix Systems, Inc. of Fort Lauderdale, FL, the teachings of which are hereby incorporated herein by reference.

### B. Appliance Architecture

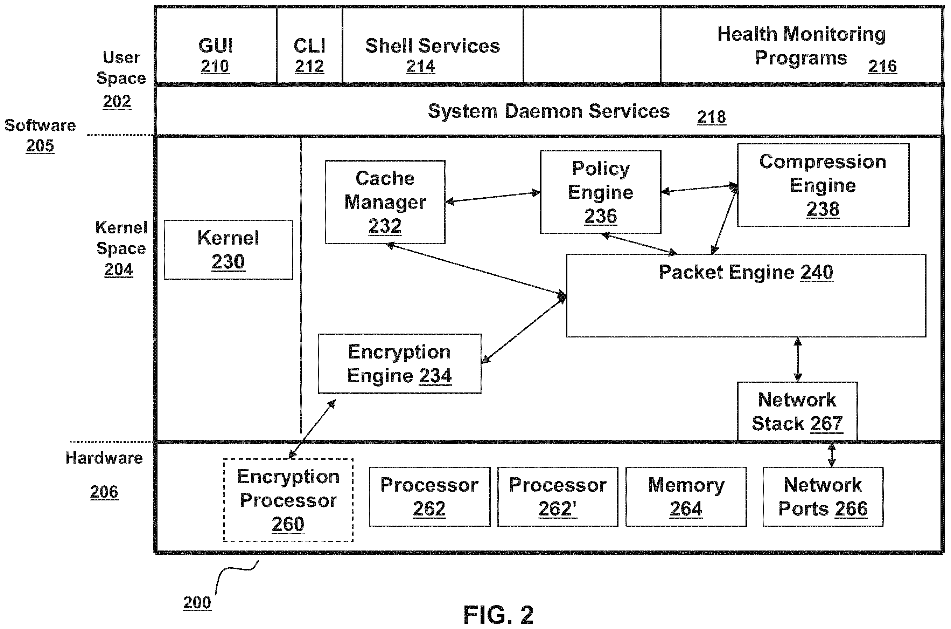

FIG. 2 shows an example embodiment of appliance 200. As described herein, appliance 200 may be implemented as a server, gateway, router, switch, bridge or other type of computing or network device. As shown in FIG. 2, an embodiment of appliance 200 may include a hardware layer 206 and a software layer 205 divided into a user space 202 and a kernel space 204. Hardware layer 206 provides the hardware elements upon which programs and services within kernel space 204 and user space 202 are executed and allow programs and services within kernel space 204 and user space 202 to communicate data both internally and externally with respect to appliance 200. As shown in FIG. 2, hardware layer 206 may include one or more processing units 262 for executing software programs and services, memory 264 for storing software and data, network ports 266 for transmitting and receiving data over a network, and encryption processor 260 for encrypting and decrypting data such as in relation to Secure Socket Layer (SSL) or Transport Layer Security (TLS) processing of data transmitted and received over the network.

An operating system of appliance 200 allocates, manages, or otherwise segregates the available system memory into kernel space 204 and user space 202. Kernel space 204 is reserved for running kernel 230, including any device drivers, kernel extensions or other kernel related software. As known to those skilled in the art, kernel 230 is the core of the operating system, and provides access, control, and management of resources and hardware-related elements of application 16. Kernel space 204 may also include a number of network services or processes working in conjunction with cache manager 232.

Appliance 200 may include one or more network stacks 267, such as a TCP/IP based stack, for communicating with client(s) 102, server(s) 106, network(s) 104, and/or other appliances 200 or 205. For example, appliance 200 may establish and/or terminate one or more transport layer connections between clients 102 and servers 106. Each network stack 267 may include a buffer 243 for queuing one or more network packets for transmission by appliance 200.

Kernel space 204 may include cache manager 232, packet engine 240, encryption engine 234, policy engine 236 and compression engine 238. In other words, one or more of processes 232, 240, 234, 236 and 238 run in the core address space of the operating system of appliance 200, which may reduce the number of data transactions to and from the memory and/or context switches between kernel mode and user mode, for example since data obtained in kernel mode may not need to be passed or copied to a user process, thread or user level data structure.

Cache manager 232 may duplicate original data stored elsewhere or data previously computed, generated or transmitted to reducing the access time of the data. In some implementations, the cache memory may be a data object in memory 264 of appliance 200, or may be a physical memory having a faster access time than memory 264.

Policy engine 236 may include a statistical engine or other configuration mechanism to allow a user to identify, specify, define or configure a caching policy and access, control and management of obj ects, data or content being cached by appliance 200, and define or configure security, network traffic, network access, compression or other functions performed by appliance 200.

Encryption engine 234 may process any security related protocol, such as SSL or TLS. For example, encryption engine 234 may encrypt and decrypt network packets, or any portion thereof, communicated via appliance 200, may setup or establish SSL, TLS or other secure connections, for example between client 102, server 106, and/or other appliances 200 or 205. In some implementations, encryption engine 234 may use a tunneling protocol to provide a VPN between a client 102 and a server 106. In some implementations, encryption engine 234 is in communication with encryption processor 260. Compression engine 238 compresses network packets bi-directionally between clients 102 and servers 106 and/or between one or more appliances 200.

Packet engine 240 may manage kernel-level processing of packets received and transmitted by appliance 200 via network stacks 267 to send and receive network packets via network ports 266. Packet engine 240 may operate in conjunction with encryption engine 234, cache manager 232, policy engine 236 and compression engine 238, for example to perform encryption/decryption, traffic management such as request-level content switching and request-level cache redirection, and compression and decompression of data.

User space 202 is a memory area or portion of the operating system used by user mode applications or programs otherwise running in user mode. A user mode application may not access kernel space 204 directly and uses service calls in order to access kernel services. User space 202 may include graphical user interface (GUI) 210, a command line interface (CLI) 212, shell services 214, health monitor 216, and daemon services 218. GUI 210 and CLI 212 enable a system administrator or other user to interact with and control the operation of appliance 200, such as via the operating system of appliance 200. Shell services 214 include the programs, services, tasks, processes or executable instructions to support interaction with appliance 200 by a user via the GUI 210 and/or CLI 212.

Health monitor 216 monitors, checks, reports and ensures that network systems are functioning properly and that users are receiving requested content over a network, for example by monitoring activity of appliance 200. In some implementations, health monitor 216 intercepts and inspects any network traffic passed via appliance 200. For example, health monitor 216 may interface with one or more of encryption engine 234, cache manager 232, policy engine 236, compression engine 238, packet engine 240, daemon services 218, and shell services 214 to determine a state, status, operating condition, or health of any portion of the appliance 200. Further, health monitor 216 may determine if a program, process, service or task is active and currently running, check status, error or history logs provided by any program, process, service or task to determine any condition, status or error with any portion of appliance 200. Additionally, health monitor 216 may measure and monitor the performance of any application, program, process, service, task, or thread executing on appliance 200.

Daemon services 218 are programs that run continuously or in the background and handle periodic service requests received by appliance 200. In some implementations, a daemon service may forward the requests to other programs or processes, such as another daemon service 218 as appropriate.

As described herein, appliance 200 may relieve servers 106 of much of the processing load caused by repeatedly opening and closing transport layer connections to clients 102 by opening one or more transport layer connections with each server 106 and maintaining these connections to allow repeated data accesses by clients via the Internet (e.g., "connection pooling"). To perform connection pooling, appliance 200 may translate or multiplex communications by modifying sequence numbers and acknowledgment numbers at the transport layer protocol level (e.g., "connection multiplexing"). Appliance 200 may also provide switching or load balancing for communications between the client 102 and server 106.

As described herein, each client 102 may include client agent 120 for establishing and exchanging communications with appliance 200 and/or server 106 via a network 104. Client 102 may have installed and/or execute one or more applications that are in communication with network 104. Client agent 120 may intercept network communications from a network stack used by the one or more applications. For example, client agent 120 may intercept a network communication at any point in a network stack and redirect the network communication to a destination desired, managed or controlled by client agent 120, for example to intercept and redirect a transport layer connection to an IP address and port controlled or managed by client agent 120. Thus, client agent 120 may transparently intercept any protocol layer below the transport layer, such as the network layer, and any protocol layer above the transport layer, such as the session, presentation or application layers. Client agent 120 can interface with the transport layer to secure, optimize, accelerate, route or load-balance any communications provided via any protocol carried by the transport layer.

In some implementations, client agent 120 is implemented as an Independent Computing Architecture (ICA) client developed by Citrix Systems, Inc. of Fort Lauderdale, FL. Client agent 120 may perform acceleration, streaming, monitoring, and/or other operations. For example, client agent 120 may accelerate streaming an application from a server 106 to a client 102. Client agent 120 may also perform end-point detection/scanning and collect end-point information about client 102 for appliance 200 and/or server 106. Appliance 200 and/or server 106 may use the collected information to determine and provide access, authentication and authorization control of the client's connection to network 104. For example, client agent 120 may identify and determine one or more client-side attributes, such as: the operating system and/or a version of an operating system, a service pack of the operating system, a running service, a running process, a file, presence or versions of various applications of the client, such as antivirus, firewall, security, and/or other software.

Additional details of the implementation and operation of appliance 200 may be as described in U.S. Patent number 9,538,345, issued January 3, 2017 to Citrix Systems, Inc. of Fort Lauderdale, FL, the teachings of which are hereby incorporated herein by reference.

### C. Systems and Methods for Providing Virtualized Application Delivery Controller

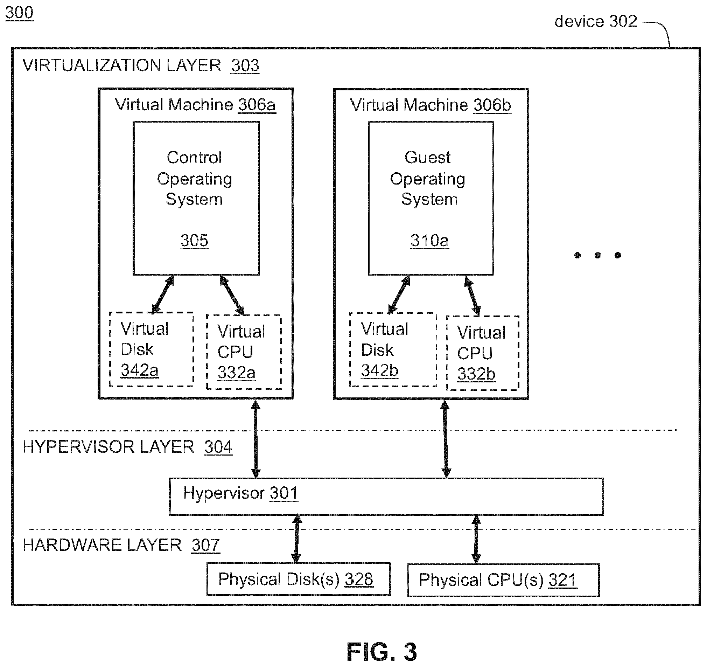

Referring now to FIG. 3, a block diagram of a virtualized environment 300 is shown. As shown, a computing device 302 in virtualized environment 300 includes a virtualization layer 303, a hypervisor layer 304, and a hardware layer 307. Hypervisor layer 304 includes one or more hypervisors (or virtualization managers) 301 that allocates and manages access to a number of physical resources in hardware layer 307 (e.g., physical processor(s) 321 and physical disk(s) 328) by at least one virtual machine (VM) (e.g., one of VMs 306) executing in virtualization layer 303. Each VM 306 may include allocated virtual resources such as virtual processors 332 and/or virtual disks 342, as well as virtual resources such as virtual memory and virtual network interfaces. In some implementations, at least one of VMs 306 may include a control operating system (e.g., 305) in communication with hypervisor 301 and used to execute applications for managing and configuring other VMs (e.g., guest operating systems 310) on device 302.

In general, hypervisor(s) 301 may provide virtual resources to an operating system of VMs 306 in any manner that simulates the operating system having access to a physical device. Thus, hypervisor(s) 301 may be used to emulate virtual hardware, partition physical hardware, virtualize physical hardware, and execute virtual machines that provide access to computing environments. In an illustrative embodiment, hypervisor(s) 301 may be implemented as a Citrix Hypervisor by Citrix Systems, Inc. of Fort Lauderdale, FL. In an illustrative embodiment, device 302 executing a hypervisor that creates a virtual machine platform on which guest operating systems may execute is referred to as a host server.

Hypervisor 301 may create one or more VMs 306 in which an operating system (e.g., control operating system 305 and/or guest operating system 310) executes. For example, the hypervisor 301 loads a virtual machine image to create VMs 306 to execute an operating system. Hypervisor 301 may present VMs 306 with an abstraction of hardware layer 307, and/or may control how physical capabilities of hardware layer 307 are presented to VMs 306. For example, hypervisor(s) 301 may manage a pool of resources distributed across multiple physical computing devices.

In some implementations, one of VMs 306 (e.g., the VM executing control operating system 305) may manage and configure other of VMs 306, for example by managing the execution and/or termination of a VM and/or managing allocation of virtual resources to a VM. In various embodiments, VMs may communicate with hypervisor(s) 301 and/or other VMs via, for example, one or more Application Programming Interfaces (APIs), shared memory, and/or other techniques.

In general, VMs 306 may provide a user of device 302 with access to resources within virtualized computing environment 300, for example, one or more programs, applications, documents, files, desktop and/or computing environments, or other resources. In some implementations, VMs 306 may be implemented as fully virtualized VMs that are not aware that they are virtual machines (e.g., a Hardware Virtual Machine or HVM). In other embodiments, the VM may be aware that it is a virtual machine, and/or the VM may be implemented as a paravirtualized (PV) VM.

Although shown in FIG. 3 as including a single virtualized device 302, virtualized environment 300 may include a plurality of networked devices in a system in which at least one physical host executes a virtual machine. A device on which a VM executes may be referred to as a physical host and/or a host machine. For example, appliance 200 may be additionally or alternatively implemented in a virtualized environment 300 on any computing device, such as a client 102, server 106 or appliance 200. Virtual appliances may provide functionality for availability, performance, health monitoring, caching and compression, connection multiplexing and pooling and/or security processing (e.g., firewall, VPN, encryption/decryption, etc.), similarly as described in regard to appliance 200.

Additional details of the implementation and operation of virtualized computing environment 300 may be as described in U.S. Patent number 9,538,345, issued January 3, 2017 to Citrix Systems, Inc. of Fort Lauderdale, FL, the teachings of which are hereby incorporated herein by reference.

In some implementations, a server may execute multiple virtual machines 306, for example on various cores of a multi-core processing system and/or various processors of a multiple processor device. For example, although generally shown herein as "processors" (e.g., in FIGs. 1C, 2 and 3), one or more of the processors may be implemented as either single- or multi-core processors to provide a multi-threaded, parallel architecture and/or multi-core architecture. Each processor and/or core may have or use memory that is allocated or assigned for private or local use that is only accessible by that processor/core, and/or may have or use memory that is public or shared and accessible by multiple processors/cores. Such architectures may allow work, task, load or network traffic distribution across one or more processors and/or one or more cores (e.g., by functional parallelism, data parallelism, flow-based data parallelism, etc.).

Further, instead of (or in addition to) the functionality of the cores being implemented in the form of a physical processor/core, such functionality may be implemented in a virtualized environment (e.g., 300) on a client 102, server 106 or appliance 200, such that the functionality may be implemented across multiple devices, such as a cluster of computing devices, a server farm or network of computing devices, etc. The various processors/cores may interface or communicate with each other using a variety of interface techniques, such as core to core messaging, shared memory, kernel APIs, etc.

In embodiments employing multiple processors and/or multiple processor cores, described embodiments may distribute data packets among cores or processors, for example to balance the flows across the cores. For example, packet distribution may be based upon determinations of functions performed by each core, source and destination addresses, and/or whether: a load on the associated core is above a predetermined threshold; the load on the associated core is below a predetermined threshold; the load on the associated core is less than the load on the other cores; or any other metric that can be used to determine where to forward data packets based in part on the amount of load on a processor.

For example, data packets may be distributed among cores or processes using receive-side scaling (RSS) in order to process packets using multiple processors/cores in a network. RSS generally allows packet processing to be balanced across multiple processors/cores while maintaining in-order delivery of the packets. In some implementations, RSS may use a hashing scheme to determine a core or processor for processing a packet.

The RSS may generate hashes from any type and form of input, such as a sequence of values. This sequence of values can include any portion of the network packet, such as any header, field or payload of network packet, and include any tuples of information associated with a network packet or data flow, such as addresses and ports. The hash result or any portion thereof may be used to identify a processor, core, engine, etc., for distributing a network packet, for example via a hash table, indirection table, or other mapping technique.

Additional details of the implementation and operation of a multi-processor and/or multi-core system may be as described in U.S. Patent number 9,538,345, issued January 3, 2017 to Citrix Systems, Inc. of Fort Lauderdale, FL, the teachings of which are hereby incorporated herein by reference.

### D. Systems and Methods for Providing a Distributed Cluster Architecture

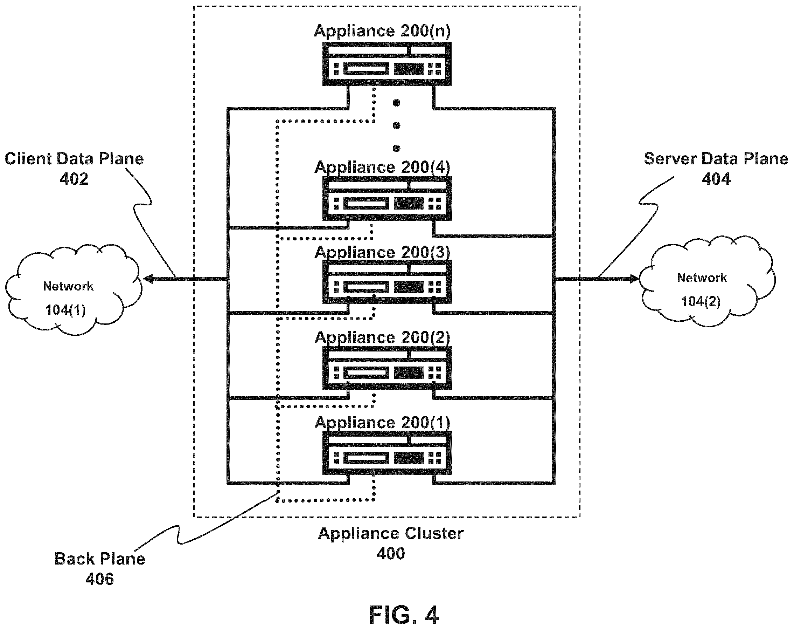

Although shown in FIGs. 1A and 1B as being single appliances, appliances 200 may be implemented as one or more distributed or clustered appliances. Individual computing devices or appliances may be referred to as nodes of the cluster. A centralized management system may perform load balancing, distribution, configuration, or other tasks to allow the nodes to operate in conjunction as a single computing system. Such a cluster may be viewed as a single virtual appliance or computing device. FIG. 4 shows a block diagram of an illustrative computing device cluster or appliance cluster 400. A plurality of appliances 200 or other computing devices (e.g., nodes) may be joined into a single cluster 400. Cluster 400 may operate as an application server, network storage server, backup service, or any other type of computing device to perform many of the functions of appliances 200 and/or 205.

In some implementations, each appliance 200 of cluster 400 may be implemented as a multi-processor and/or multi-core appliance, as described herein. Such embodiments may employ a two-tier distribution system, with one appliance if the cluster distributing packets to nodes of the cluster, and each node distributing packets for processing to processors/cores of the node. In many embodiments, one or more of appliances 200 of cluster 400 may be physically grouped or geographically proximate to one another, such as a group of blade servers or rack mount devices in a given chassis, rack, and/or data center. In some implementations, one or more of appliances 200 of cluster 400 may be geographically distributed, with appliances 200 not physically or geographically co-located. In such embodiments, geographically remote appliances may be joined by a dedicated network connection and/or VPN. In geographically distributed embodiments, load balancing may also account for communications latency between geographically remote appliances.

In some implementations, cluster 400 may be considered a virtual appliance, grouped via common configuration, management, and purpose, rather than as a physical group. For example, an appliance cluster may comprise a plurality of virtual machines or processes executed by one or more servers.

As shown in FIG. 4, appliance cluster 400 may be coupled to a first network 104(1) via client data plane 402, for example to transfer data between clients 102 and appliance cluster 400. Client data plane 402 may be implemented a switch, hub, router, or other similar network device internal or external to cluster 400 to distribute traffic across the nodes of cluster 400. For example, traffic distribution may be performed based on equal-cost multi-path (ECMP) routing with next hops configured with appliances or nodes of the cluster, open-shortest path first (OSPF), stateless hash-based traffic distribution, link aggregation (LAG) protocols, or any other type and form of flow distribution, load balancing, and routing.

Appliance cluster 400 may be coupled to a second network 104(2) via server data plane 404. Similarly to client data plane 402, server data plane 404 may be implemented as a switch, hub, router, or other network device that may be internal or external to cluster 400. In some implementations, client data plane 402 and server data plane 404 may be merged or combined into a single device.

In some implementations, each appliance 200 of cluster 400 may be connected via an internal communication network or back plane 406. Back plane 406 may enable inter-node or inter-appliance control and configuration messages, for inter-node forwarding of traffic, and/or for communicating configuration and control traffic from an administrator or user to cluster 400. In some implementations, back plane 406 may be a physical network, a VPN or tunnel, or a combination thereof.

Additional details of cluster 400 may be as described in U.S. Patent number 9,538,345, issued January 3, 2017 to Citrix Systems, Inc. of Fort Lauderdale, FL, the teachings of which are hereby incorporated herein by reference.

### E. Automatic Cluster and Application Scaling

Clusters of servers or computing devices may use parallel processing techniques to provide a remote analytics service to make decisions in a cloud environment. The clusters may do so using machine learning techniques to make decisions and/or to perform analytics. Training and executing machine learning models to make such decisions may require a substantial amount of processing power, particularly when the machine learning models are continuously updated over time with new versions trained on new training data. As new versions of applications are added to the cluster, the cluster may run out of resources to adequately process (e.g., process without errors or process without a significant amount of latency (e.g., a latency above a threshold)) each of the applications.

As the number and complexity of hosted applications at a cluster increase, many technical challenges may surface. For example, the number of applications hosted in the cluster may change frequently as new applications or updates to existing applications are deployed. It can be important to easily deploy new applications, even in an experimental state, to preserve a delivery pace. In some cases, application updates can involve deploying multiple versions of an application in parallel and testing them in a real-world environment. The multiple versions can be deployed for a defined amount of time, after which the older versions may be removed from memory at the cluster or become obsolete (e.g., red/black or canary deployment styles). Finally, in some cases, deployed applications may be scheduled to recursively run for historical time windows (e.g., data backfilling). The above may introduce a changing processing load that the clusters may need to efficiently serve.

In another example, testing new applications or application versions at scale and creating a performance profile for the applications or application versions may introduce considerable delay in the machine learning solution lifecycle. One challenge is the creation of sufficient test datasets to test machine learning models as well as a lack of expertise in evaluating the test outcomes to appropriately adjust weights of the models. As applications are deployed to a cluster, keeping the scale testing coverage at acceptable levels can become more difficult. In some instances, application resources are incorrectly configured upon deployment, or there may be no sufficient buffers set for preserving an acceptable application performance.

In another example, deployed applications may not have static performance. Clusters may be required to process data at varying rates as tenants connect to the clusters. A cluster may process data for multiple tenants in parallel (e.g., at the same time). Accordingly, the input data sets can change abruptly with the onboarding of new tenants, or gradually, as the tenant telemetry volume increases over time. Apart from the data size, the data distributions may change over time. The change in input data may impact the behavior of deployed applications in terms of execution time and resource utilization and/or may cause application failures.

In another example, at the application level, a cluster may have a dynamic resource allocation feature, per which a resource manager service can dynamically add extra executors to an application or remove idle executors. However, such dynamic resource allocation may be limited because it may not allow for scaling up the driver or executor instances (e.g., add or allocate more driver and/or executor memory). Also, signals considered for scaling in/out an application may be limited to the number of tasks assigned to each executor.

In another example, application and cluster monitoring and alerting may assist administrators in identifying problems in application and/or cluster deployment. However, site reliability engineers may need to be involved. Once a new alert comes in, a site reliability engineer may evaluate the available metrics and take an action. A lack of expertise may cause a site reliability engineer to be hesitant to apply any changes. The site reliability engineer may then reach out to developers for assistance. This process may add extra delays in the process of adding or updating applications at a cluster.

In another example, as applications are added to a cluster of servers for processing, performance of the cluster may degrade from a lack of memory or other processing resources to execute the applications. Such degradation may result in execution failures or failures to generate requested data within defined time windows.

Implementations of the systems and methods discussed herein improve upon the above-described deficiencies by providing a method of automatically scaling clusters and/or applications in a cloud environment prior to and/or after application deployment. For example, prior to deploying an application, a server may proactively monitor the cluster size (e.g., memory utilization and/or CPU utilization capacity) of a cluster to which the application is to be deployed. The server may collect the current cluster size and configuration and utilization metrics of the cluster. The server may combine or aggregate the current cluster size and configuration and utilization metrics with a post-deployment workload (e.g., determine configuration and utilization metrics with the new application and determine if the current cluster size has sufficient capacity to store and process the new application). The server may calculate a new cluster size and apply the new cluster size (e.g., determine a number of computing devices to add to the cluster and add the determined number of computing devices to the cluster). Accordingly, the server may set the cluster in a state to successfully host planned workload changes.

The server may continuously monitor the size of the cluster. The server may do so by monitoring cluster metrics (e.g., pending jobs, memory utilization, vcore utilization, etc.) and/or cross-application metrics (start-up delay, failures, timeouts, out of speed triggers, etc.). The server may implement cluster auto-scale policies, which may drive cluster size adjustments and emit relevant alerts. The "cluster scaling service" responsible for the above may be cloud agnostic and may use available cloud provider application programming interfaces (APIs) or terraform template configuration to apply the changes.

The server may additionally monitor applications executing at the cluster. For example, the server may collect and monitor application metrics (e.g., failures, execution time, retries, used driver and executor memory, CPU utilization, etc.). The server may execute a scaling algorithm to make an application reconfiguration decision. If the server determines a change in configuration to the application is needed (e.g., determines the application is not executing effectively), the server may add or remove executors and/or increase driver or executor memory (e.g., allocate more driver or executor memory) for the application.

The server may additionally monitor the performance of applications being processed at the cluster. For example, as the cluster of computers is executing the applications stored at the cluster, the server may retrieve metrics (e.g., pending jobs, memory utilization, vcore utilization, etc.) and cross-application metrics (e.g., start-up delay, failures, timeouts, out of speed triggers, etc.). Responsive to determining one of the applications is not performing as expected (e.g., a metric is above a failure threshold), the server may reconfigure (e.g., automatically reconfigure) the cluster to have more capacity to process the cluster or the application to require fewer memory resources or otherwise address the problem. In this way, the server may reduce latency and problems that the cluster may encounter when processing applications, including when doing so using parallel processing techniques.

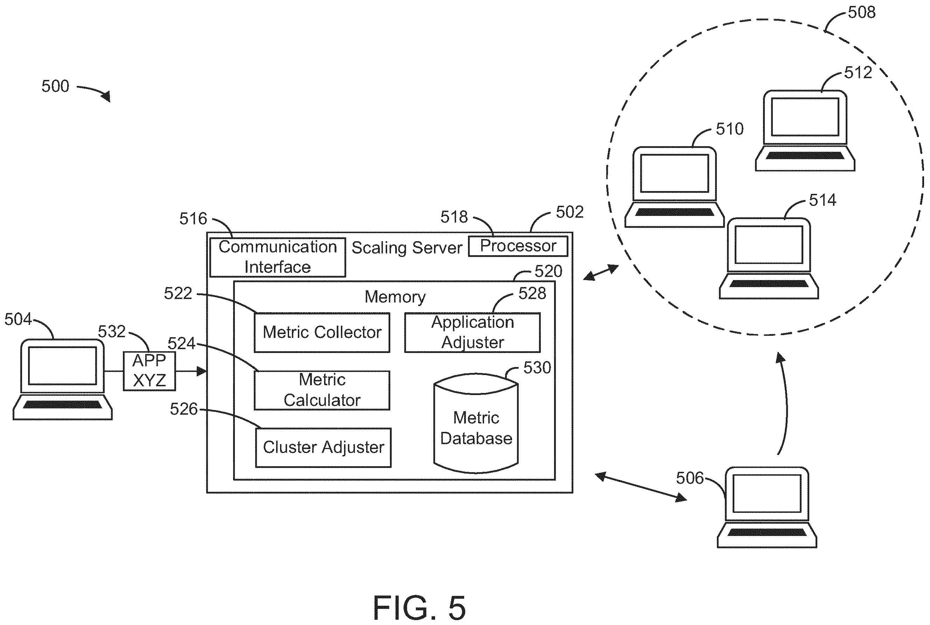

Referring now to FIG. 5, a block diagram of a system 500 for automatically scaling clusters and applications is shown, in accordance with an illustrative embodiment. The system 500 may include the same or similar components to the system 700. The system 500 is shown to include a scaling server 502 in communication with a computing device 504, a computing device 506, and a cluster of computing devices 508. The scaling server 502 may communicate with the computing devices 504 and 506 and the cluster of computing devices 508 over a network. The computing device 504 may be similar to or the same as the client 102 and the network may be similar to or the same as the network 104. In some cases, the computing device 504 is a computer of the scaling server 502. The computing device 506 may be similar to or the same as the appliance 200. The cluster of computing devices 508 may include computing devices 510, 512, and 514 (and any number of other computing devices) and may be similar to or the same as the appliance cluster 400. The scaling server 502 or another server may monitor the cluster of computing devices 508 and/or the applications executing on the cluster of computing devices 508 for operational analysis and error mitigation.

Scaling server 502 may include a communication interface 516, a processor 518, and a memory 520. The communication interface 516, the processor 518, and the memory 520 may comprise any of the various communications interfaces, processors, and memory devices described above. Although shown as a single server, the scaling server 502 may comprise a plurality of servers, such as a server farm, a cloud of virtual machines executed by one or more physical machines, or other types or forms of computing devices. For example, the scaling server 502 can be a set of containers or pods in a Kubernetes environment or cluster.

The memory 520 may include a metric collector 522, a metric calculator 524, a cluster adjuster 526, an application adjuster 528, and a metric database 530, in some implementations. The metric collector 522, the metric calculator 524, the cluster adjuster 526, the application adjuster 528, and the metric database 530 may run or execute as services within a Kubernetes cluster, in some implementations. Components 522-528 may operate together to use a variety of techniques to automatically scale clusters of computing devices (e.g., the cluster of computing devices 508) and/or applications executing on such clusters to reduce errors and improve performance of the applications. Responsive to determining a cluster does not have adequate processing resources to store, run, or execute a new version of an application, the components 516-528 may increase the size of the cluster of computing devices 508 (e.g., add a new computing device (e.g., the computing device 506) to the cluster) before deploying the application to the cluster to ensure the cluster can process the new version of the application.

The metric collector 522 may comprise instructions executable by one or more processors (e.g., the processor 518) that cause the processors to receive monitored data (e.g., in the form of data packets) from the cluster of computing devices 508. The metric collector 522 may be or include a monitoring server (e.g., monitoring system 710). The metric collector 522 may create data sets (e.g., vectors) that can be used to detect errors and other characteristics of the monitored data. The monitored data may include values for performance metrics or characteristics of performance that indicate the operating capacity and/or characteristics of the cluster of computing devices 508. Such metrics may include cluster metrics, cross-application metrics, cluster configuration metrics, and application code metrics. Cluster metrics may include memory utilization, CPU utilization, number of applications running/pending, and/or container allocated/ pending. Cross-application metrics may include failed/timed-out applications and start-up time. Cluster configuration metrics may include the number of cluster worker nodes, per worker node memory/vcores, and yarn queue sizes. Application code metrics (which may be considered when triggered when determining whether to deploy an application) may include total number of configured memory, executors, and/or cores (including driver cores); total number of new applications to be deployed and memory, executor, and vcore difference; and/or recursive processing trigger configuration and respective concurrency.

The monitored data may also include values for application metrics or characteristics of application performance that indicate how an application executed by the cluster of computing devices 508 (e.g., executed in parallel across the computing devices of the cluster of computing devices 508) is operating. Application performance metrics may include application configuration metrics and application metrics/logs. Application configuration metrics may include latest configuration, timeout, periodicity, and type and priority. Application metrics/logs may include execution time; successful runs; timeouts; failures; java virtual machine (JVM) metrics (e.g., heap memory, garbage collection (GC) time, etc.), executor utilization, completed, pending failed tasks; input/output records; and exceptions.

The cluster and application metrics that the metric collector 522 collects can enable cluster and application auto-scaling to improve performance of the cluster of computing devices 508 and applications executing on the cluster of computing devices 508. The metric collector 522 can store the metrics in the metric database 530. In some implementations, the scaling server 502 can label the metrics based on the time periods in which the metrics were collected. For example, the metric collector 522 can store metrics from a first time period as historical data with a label indicating the metrics were collected or generated during the first time period. The metric collector 522 can store metrics collected from a second time period subsequent to the first time period with a label indicating the metrics indicate the current status and resource requirements of the cluster of computing devices 508 and applications executing on the cluster of computing devices 508. Accordingly, the scaling server may compare the metrics from the different sets of data to detect degradations in performance of the cluster of computing devices 508 and/or the applications executing on the cluster of computing devices 508. By collecting such metrics, the scaling server 502 can adjust the configurations of the cluster of computing devices 508 and applications executing on the cluster of computing devices 508 for long-term performance improvements.

The metric collector 522 may collect the aforementioned metrics (e.g., the cluster and/or application metrics) from different clusters of computing devices by monitoring the clusters. The metric collector 522 may do so by transmitting requests for metrics to the clusters of computing devices (e.g., transmit requests through one or more application programming interfaces (APIs)). The metric collector 522 may transmit the requests at defined intervals and/or upon receiving a user input indicating to transmit a request. The metric collector 522 may transmit the requests to the one or more computing devices of the cluster of computing devices 508. One or more computing devices (e.g., the same computing devices that received the requests or other computing devices of the clusters) of the cluster 508 may transmit the application and/or cluster metrics back to the metric collector 522. The metric collector 522 may receive the metrics from the cluster of computing devices 508 and store the received metrics in the memory 520. For instance, the metric collector 522 may store the received metrics in the metric database 530 (e.g., a relational database or a service executed by the scaling server 502). The metric collector 522 may similarly retrieve metrics from any number of clusters of computing devices.

In some implementations, the computing devices of the cluster of computing devices 508 may generate and store metrics for the cluster of computing devices 508 and/or applications executing on the cluster 508. For example, over time, one or more of the computing devices 510-514 may monitor performance of applications executing at the cluster of computing devices 508. In doing so, the computing devices may generate different application metrics of the applications and/or cluster metrics of the cluster of computing devices 508. The one or more monitoring computing devices may monitor and generate such metrics at set intervals or upon receiving a user input. The monitoring computing devices may store the generated metrics in memory (e.g., a shared memory). Accordingly, when at least one of the computing devices 510-514 receives a request from the metric collector 522 for metrics, the computing devices 510-514 may retrieve the generated metrics from memory and respond to the request with a message including the retrieved metrics. In some implementations, the computing devices 510-514 may automatically transmit generated metrics to the scaling server 502 upon generating the metrics.

In some implementations, the computing devices 510-514 of the cluster 508 may have connectors that automatically publish new metric values (cluster, node or application level metrics) to an external monitoring system (e.g., a monitoring system of the scaling server 502, such as the metric collector 522). The metric calculator 524, the cluster adjuster 526, and/or the application adjuster 528 (e.g., scaling services of the metric calculator 524, the cluster adjuster 526, and/or the application adjuster 528) can pull/query metrics from the monitoring system periodically to proceed with needed calculations.

In some implementations, the metric collector 522 may transmit the requests for metrics upon receiving an identification 532 of a version of an application. The metric collector 522 may receive the identification 532 from another computing device of the scaling server 502 or across a network from the computing device 504. The metric collector 522 may receive the identification 532 in a data packet. Upon receiving the identification 532, the metric collector 522 may transmit a request for metrics of the cluster of computing devices 508 to a computer of the cluster 508, such as a current capacity (e.g., computer resource capacity such as total or available memory or CPU utilization of the cluster of computing devices 508) of the cluster of computing devices 508. In such cases, the computing devices 510-514 may receive the request and either retrieve metrics (e.g., the requested metrics) from memory or query the computing devices of the cluster of computing devices 508 and generate and transmit the metrics back to the metric collector 522.

The identification 532 may be an identification (e.g., a numeric or alphanumeric string) of a version of a new application (e.g., version 1.0 of an application) or a new version as an update to an application that is already stored and executed by the cluster of computing devices 508. The application may be an application for analyzing data and/or for otherwise managing a network of computing devices, such as a network of computing devices that operate to host remote desktop sessions that client devices can access. The application may be or include a machine learning model (e.g., a neural network, a support vector machine, random forest, etc.). The metric collector 522 may receive the identification 532 with one or more metrics of the application, such as a configuration of the application, a memory utilization, and/or a value of a CPU utilization of the application in one or more messages. In this way, the metric collector 522 may receive the relevant data to determine whether to adjust the configuration of the cluster of computing devices 508 such that the cluster of computing devices 508 can store and execute the application identified by the identification 532.

In some implementations, the metric collector 522 may receive the application identified by the identification 532. The metric collector 522 may receive the application in the same data packet as the data packet that includes the identification 532. In such implementations, the metric collector 522 may determine one or more metrics for the application by executing the application and monitoring performance of the application by measuring different metric types (e.g., memory and/or CPU utilization) of the application. The metric collector 522 may generate the metrics and store the metrics in the memory 520 and/or in a cache. In this way, the metric collector 522 may generate or receive metrics for the application.

The metric calculator 524 may comprise instructions executable by one or more processors (e.g., the processor 518) that cause the processors to calculate metrics indicating operation of the cluster of computing devices 508. The metric calculator 524 may be or include scaling services such as the cluster scaling service 704 and/or the application scaling service 712. For example, the metric calculator 524 may determine a memory utilization (e.g., a predicted or determined memory utilization) of the cluster of computing devices 508 as a function of the current memory utilization of the cluster of computing devices 508 and the memory utilization of the version of the application. The metric calculator 524 may do so by aggregating the current memory utilization (e.g., a first metric) of the cluster of computing devices 508 and the memory utilization (e.g., a second metric) of the version of the application. In cases in which the new version of the application is an updated version of an application already stored and processed at the cluster of computing devices, the metric calculator 524 may determine the determined memory utilization by replacing the memory utilization requirements of the old version of the application with the memory utilization requirements of the new version of the application (e.g., subtracting the memory utilization requirements of the old version and adding the memory utilization requirements of the new version of the application to the memory utilization requirements of other (e.g., all other) applications executing at the cluster of computing devices). In doing so, the metric calculator 524 may calculate an aggregate memory utilization (e.g., a third metric) that indicates a predicted total memory utilization of the cluster of computing devices 508 after deployment of the application to the cluster of computing devices 508. The metric calculator 524 may use any other functions (e.g., an averaging function, a subtraction function, a linear function, etc.) to calculate or determine the predicted total memory utilization. The metric calculator 524 may additionally or instead similarly determine predicted total metrics for other metrics, such as CPU utilization. In this way, the metric calculator 524 can determine how the cluster of computing devices 508 will operate with new versions of applications before the new versions of the applications are deployed to the cluster of computing devices 508.

The metric calculator 524 may determine whether the cluster of computing devices 508 has the computer resource capacity (e.g., memory capacity or CPU capacity) to retrieve and execute the application. The metric calculator 524 may do so by comparing the determined metric of the cluster of computing devices 508 in combination with the application (e.g., the predicted or determined memory utilization or CPU utilization) to a threshold. The threshold may be specific to a metric type (e.g., memory utilization or CPU utilization). For example, the metric calculator 524 may compare a determined memory utilization of the cluster of computing devices 508 including the application to a memory utilization threshold. Responsive to determining the determined memory utilization exceeds the memory utilization threshold, the metric calculator 524 may determine to adjust the cluster of computing devices 508. In doing so, the metric calculator 524 may determine to increase the memory resources of the cluster of computing devices 508. Similarly, the metric calculator 524 may additionally or instead compare a determined CPU utilization of the cluster of computing devices 508 with the application to a CPU utilization threshold. Responsive to determining the determined CPU utilization exceeds the determined CPU utilization threshold, the metric calculator 524 may determine to adjust the cluster of computing devices 508 to increase the CPU resources of the cluster of computing devices 508. The metric calculator 524 may compare combined or determined metrics of any type with corresponding thresholds.

The thresholds may be proportional to a capacity of the cluster of computing devices 508 for the type of metric to which the thresholds correspond. For example, a memory utilization threshold may be proportional to (e.g., a defined percentage of) the memory utilization capacity of the cluster of computing devices 508. The thresholds may be the total capacity of the cluster of computing devices 508 and/or any percentage of the total capacity of the cluster of computing devices 508. A CPU utilization threshold may be similarly proportional to a CPU utilization capacity of the cluster of computing devices 508. The percentages and/or thresholds may be input by an administrator according to preferences of the administrator.

Upon the metric calculator 524 determining the determined metric of the cluster of computing devices 508 with the application exceeds the threshold, the cluster adjuster 526 may adjust the size of the cluster of computing devices 508. The cluster adjuster 526 may comprise instructions executable by one or more processors (e.g., the processor 518) that cause the processors to increase or decrease the size of clusters of computing devices, such as the cluster of computing devices 508. The cluster adjuster 526 may be or include a scaling service (e.g., the cluster scaling service 704) and/or a scaling deployment service (e.g., the scaling deployment service 708). The cluster adjuster 526 may calculate the number of computing devices to add to the cluster of computing devices 508 and add the calculated number of computing devices to the cluster of computing devices 508. To do so, the cluster adjuster 526 may calculate a difference between a determined metric and the corresponding threshold for the determined metric. The cluster adjuster 526 may do so by subtracting a value of the threshold from the predicted metric.

The cluster adjuster 526 may then determine a number of computing devices that would be required to account for the calculated difference. The cluster adjuster 526 may do so, for example, by identifying (e.g., from memory or from a remote computing device) the resources (e.g., the memory and/or CPU resources) of individual computing devices and aggregating the resources of the individual computing devices until identifying a number of computing devices with an amount of resources that is at least equal to or exceeds the difference. The identified computing devices may each have the same amount or different amounts of computing resources. The identified computing devices may be computing devices the cluster adjuster 526 can add to the cluster of computing devices 508 such that the cluster of computing devices 508 has the capacity to store and execute the new version of the application (e.g., execute using parallel processing techniques).

The cluster adjuster 526 may add the identified computing devices to the cluster of computing devices 508. The cluster adjuster 526 may do so, for example, by generating a message and transmitting the message to the identified computing devices or administrator computing devices associated with the identified computing devices (e.g., accessed by common owners of the identified computing devices). The message may include an indication to add the identified computing devices to the cluster of computing devices 508. The computing devices may receive the message and connect the identified computing devices (e.g., the computing device 506) to the cluster of computing devices 508. In this way, the cluster adjuster 526 may increase the size of the cluster of computing devices 508 such that the cluster of computing devices 508 can have adequate computing resources to store and execute the new version of the application in parallel with the other applications already stored and executing at the cluster of computing devices 508.

The cluster adjuster 526 or the computing device 504 may then deploy (e.g., transmit) the new version of the application to one or more computing devices of the cluster of computing devices 508 for processing. To do so, the cluster adjuster 526 may deploy the new version of the application to the one or more computing devices across a network. The computing devices of the cluster of computing devices 508 may receive and download the new version of the application. In cases in which the new version replaces an old version of the same application, the computing devices may remove the old version of the application upon downloading the new version. Accordingly, the computing devices of the cluster of computing devices can conserve memory and other computer resource utilization over time as the computing devices download new versions of applications. The components of the scaling server 502 may perform these processes for any cluster metrics, cross-application metrics, cluster configuration metrics, and/or application code metrics.

The scaling server 502 (e.g., a monitoring server of the scaling server 502) may monitor performance of the application at the cluster of computing devices 508. The scaling server 502 may do so after deploying the application to the cluster of computing devices 508. The scaling server 502 may do so to detect any degradation in performance of the application and/or to detect errors that occur with the application. For example, the metric collector 522 may collect metrics (e.g., application metrics such as application performance metrics, application configuration metrics, and/or application metrics/logs) from the cluster of computing devices 508 indicating how the application is performing at the computing devices 510-514. The metric collector 522 may collect the metrics over time as described above (e.g., poll one or more of the computing devices 510-514 at set intervals or upon receipt of a user input or automatically receive such metrics from the computing devices 510-514).

The metric calculator 524 may detect anomalous behavior in the application based on the metrics collected by the metric collector 522. For example, the metric calculator 524 may identify a first set of application metrics of the application collected or generated over a first time period (e.g., a historical time period). The first time period may have any defined length and/or may be a time period that begins upon deployment of the application to the cluster of computing devices 508. The metric calculator 524 may also identify a second set of application metrics of the application collected or generated over a second time period (e.g., a current time period) subsequent to the first time period. The metric calculator 524 may compare the first set of application metrics with the second set of application metrics. Responsive to determining there is a difference exceeding a threshold between the first set of application metrics and the second set of application metrics, the metric calculator 524 may determine the application is performing anomalously and may need to be updated by the application adjuster 528.

In some implementations, to compare the first set of application metrics with the second set of application metrics, the metric calculator 524 may calculate a first average or another determined metric (e.g., a sum or another determined value) from the first set of application metrics and/or a second average or another determined metric from the second set of application metrics. The metric calculator 524 may execute the same function (e.g., an averaging or summation function) to calculate the determined metric from the first set of application metrics and the determined metric from the second set of application metrics such that the two determined metrics may be compared. The metric calculator 524 may compare the first determined metric with the second determined metric to compare the two sets of application metrics to determine if the application is performing anomalously. Responsive to determining the second determined metric exceeds the first determined metric, the metric calculator 524 may determine the application is performing anomalously and may need to be updated by the application adjuster 528.

In some implementations, the metric calculator 524 may determine a threshold from the first determined metric. The metric calculator 524 may determine the threshold as the first determined metric or by aggregating a defined value with the first determined metric or by multiplying the first determined metric by a defined value. The metric calculator 524 may compare the second determined metric with the threshold to compare the first set of metrics with the second set of metrics. Responsive to determining the second determined metric exceeds the threshold, the metric calculator 524 may determine the application is performing anomalously and may need to be updated by the application adjuster 528. In this way, the metric calculator 524 may filter out false positives of anomalous behavior by the application and account for slight variances in performance of the application over time that do not necessarily indicate the application is operating improperly or require any adjusting.

Upon the metric calculator 524 determining the application is performing anomalously, the application adjuster 528 may adjust the configuration of the application. The application adjuster 528 may comprise instructions executable by one or more processors (e.g., the processor 518) that cause the processors to adjust the configurations of applications to improve the performance of the applications. The application adjuster 528 may be or include a scaling service (e.g., the application scaling service 712), a scaling deployment service (e.g., the scaling deployment service 708), and/or an application scheduler (e.g., the application scheduler 716). The application adjuster 528 may adjust the configurations of applications by adding or removing executors or drivers and/or increasing or decreasing the driver or executor memory allocated to the application. In some implementations, to adjust the configurations of such applications, the application adjuster 528 may adjust the code of a locally stored version of the application to increase or decrease the executors or drivers and/or the memory allocations of the executors or drivers of the application. The application adjuster 528 may then transmit the adjusted version of the application to the cluster of computing devices 508. In some implementations, the application adjuster 528 may adjust the configuration of the application by transmitting one or more messages to the computing devices of the cluster 508 that include instructions to increase or decrease the executors or drivers and/or the memory allocations of the executors or drivers of the application at the computing devices of the cluster of computing devices 508. The computing devices of the cluster of computing devices 508 may receive the messages and adjust the configurations of the applications according to the instructions of the messages.

In some implementations, the application adjuster 528 may determine how to adjust the configuration of the application. The application adjuster 528 may do so using one or more rules and/or based on the metric type of the metric for which the metric calculator 524 determined the application was performing anomalously. Different application metric types may correspond to different corrections. In one example, the application adjuster 528 may determine to allocate further executors to the application responsive to determining the application experienced a number of boot-up errors exceeding a threshold. In another example, the application adjuster 528 may determine to allocate further driver memory to an application upon determining the application was using an amount of driver memory exceeding a threshold. In yet another example, the application adjuster 528 may determine to increase the number of drivers and/or executors allocated to the application responsive to determining the application was experiencing an amount of latency above a threshold. Such rules may be stored in the memory 520 of the scaling server 502. The application adjuster 528 may determine to make adjustments to the application based on any such rules. Upon determining which adjustments to make to the application, the application adjuster 528 may adjust the application according to the determination.

The scaling server 502 may monitor performance of the application at the cluster of computing devices 508. The scaling server 502 may do so to detect any degradation in performance of the cluster of computing devices 508 as a whole. For example, the metric collector 522 may collect metrics from the cluster of computing devices 508 indicating how the computing devices of the cluster of computing devices 508 and/or the applications executing on the computing devices of the cluster of computing devices 508 are performing. The metric collector 522 may collect the metrics over time as described above (e.g., poll one or more of the computing devices 510-514 at set intervals or upon receipt of a user input or automatically receive such metrics from the computing devices 510-514).

The metric calculator 524 may detect anomalous behavior in the cluster of computing devices based on the metrics collected by the metric collector 522. For example, the metric calculator 524 may identify a first set of cluster metrics of the cluster of computing devices 508 collected or generated over a first time period (e.g., a historical time period). The first time period may have any defined length and/or may be a time period that begins upon deployment of the application to the cluster of computing devices 508. The metric calculator 524 may also identify a second set of cluster metrics of the cluster of computing devices 508 collected or generated over a second time period (e.g., a current time period) subsequent to the first time period. The metric calculator 524 may compare the first set of cluster metrics with the second set of cluster metrics. Responsive to determining there is a difference exceeding a threshold between the first set of cluster metrics and the second set of cluster metrics, the metric calculator 524 may determine the cluster of computing devices is performing anomalously (e.g., experiencing an error and/or performing sub-optimally) and may need to be updated by the cluster adjuster 526.

In some implementations, to compare the first set of cluster metrics with the second set of cluster metrics, the metric calculator 524 may calculate a first average or another determined metric from the first set of cluster metrics and/or a second average or another determined metric from the second set of cluster metrics. The metric calculator 524 may execute the same function (e.g., an averaging or summation function) to calculate the determined metric from the first set of cluster metrics and the determined metric from the second set of cluster metrics such that the two determined metrics may be compared. The metric calculator 524 may compare the first determined metric with the second determined metric to compare the two sets of cluster metrics to determine if the cluster of computing devices 508 is performing anomalously. Responsive to determining the second determined metric exceeds the first determined metric, the metric calculator 524 may determine the cluster of computing devices 508 is performing anomalously and may need to be updated by the cluster adjuster 526.

In some implementations, the metric calculator 524 may determine a threshold from the first determined metric. The metric calculator 524 may determine the threshold to be the first determined metric or by aggregating a defined value with the first determined metric or by multiplying the first determined metric by a defined value. The metric calculator 524 may compare the second determined metric with the threshold to compare the first set of metrics with the second set of metrics. Responsive to determining the second determined metric exceeds the threshold, the metric calculator 524 may determine the cluster of computing devices 508 is performing anomalously and may need to be updated by the cluster adjuster 526. In this way, the metric calculator 524 may filter out false positives of anomalous behavior by the cluster of computing devices 508 and account for slight variances in performance of the cluster of computing devices 508 over time that do not necessarily indicate the cluster of computing devices is operating improperly requires any adjusting.

Upon the metric calculator 524 determining the cluster of computing devices 508 is performing anomalously, the cluster adjuster 526 may adjust the configuration of the cluster of computing devices 508. The cluster adjuster 526 may adjust the configuration of the cluster of computing devices 508 by adding or removing computing devices from the cluster of computing devices. The cluster adjuster 526 may determine to add computing devices responsive to determining the current memory utilization or CPU utilization of the cluster of computing devices 508 exceeds a threshold. The cluster adjuster 526 may do so, for example, by determining a number of computing devices to add to the cluster of computing devices 508 based on a difference between the current memory utilization or CPU utilization and a corresponding threshold (e.g., a threshold proportional to or a percentage of the total memory utilization capacity or CPU utilization capacity). The cluster adjuster 526 may do so in a similar manner to the manner in which the cluster adjuster 526 determined the number of computing devices to add to the cluster of computing devices 508 prior to deploying the new application as described above.

In some implementations, the cluster adjuster 526 may adjust the configuration of the cluster of computing devices 508 based on anomalous behavior by a particular application. For example, the metric calculator 524 may determine an application executing on the cluster of computing devices 508 is experiencing anomalous behavior as described above (e.g., an application metric of the applications current performance is anomalous compared to historical data of the applications performance with respect to the same metric). Upon determining the application is performing anomalously, the metric calculator 524 may determine whether to adjust the configuration of the application itself or the cluster of computing devices 508 on which the application is executing. The metric calculator 524 may do so based on the metric or metrics for which the metric calculator 524 detected the anomaly. For example, responsive to detecting an anomaly in one of start-up delays, failures, timeouts, or out-of-speed triggers of the application, the metric calculator 524 may determine to adjust the configuration of the cluster of computing devices 508 and the cluster adjuster 526 may adjust the configuration of the cluster of computing devices 508 (e.g., increase or decrease the size of the cluster of computing devices 508). The components of the scaling server 502 may perform these processes for any cluster metrics, cross-application metrics, cluster configuration metrics, and/or application code metrics.

The application adjuster 528 may adjust the configuration of the application based on anomalies in other metrics. For example, responsive to detecting an anomaly in one of application failures, execution time, retries, used driver and executor memory, or CPU utilization, the metric calculator 524 may determine to adjust the configuration of the application. The application adjuster 528 may then adjust the configuration of the application (e.g., adjust the number or the memory allocations of the executors or drivers of the application). The application adjuster 528 and the cluster adjuster may apply any types of rules to detect anomalies and determine whether and how to adjust the configurations of applications and/or clusters.

In some implementations, the cluster adjuster 526 may reduce the size of the cluster of computing devices 508. The cluster adjuster 526 may do so, for example, upon the metric calculator 524 determining the cluster of computing devices 508 is utilizing fewer resources than the cluster of computing devices 508 historically used. The reduced resource usage may result from the applications being removed from memory of the cluster of computing devices 508 and/or the applications executing on the cluster of computing devices 508 being optimized to require fewer computer resources to be executed. To determine to reduce the size of the cluster of computing devices 508, the metric calculator 524 may compare the first set of cluster metrics with the second set of cluster metrics as described above. For example, in some implementations, the metric calculator 524 may compare determined values (e.g., averages or summations) of the first set of metrics with the second set of metrics. In some implementations, the metric calculator 524 may compare the determined value for the second set of metrics with a threshold (e.g., a second threshold) determined based on the determined value of the first set of metrics (e.g., the determined value of the first set of metric minus a defined value). If the determined value of the first set of cluster metrics is less than the threshold determined from the first set of metrics, the metric calculator 524 may determine one or more computing devices can be removed from the cluster of computing devices 508.

The cluster adjuster 526 may remove the one or more computing devices from the cluster of computing devices 508 responsive to the metric calculator 524 determining to remove one or more computing devices from the cluster of computing devices. The cluster adjuster 526 may do so based on the difference between the determined value for the first set of metrics and the threshold. For example, the cluster adjuster 526 may determine a number of computing devices to remove from the cluster of computing devices 508. The cluster adjuster 526 may do so by identifying the computing resources of the metric for which the difference was less than a threshold that different computing devices provide to the cluster of computing devices (e.g., the amount of memory or CPU the individual computing devices of the cluster of computing devices 508 add to the cluster of computing devices 508). The cluster adjuster 526 may determine a difference between the determined value from the second set of metrics and the threshold and determine a number of computing devices that can be removed to cause a change in the second set of metrics for the cluster of computing devices 508 that is at least equal to or exceeds the difference. The cluster adjuster 526 may identify the number and transmit messages to the individual computing devices to remove from the cluster 508 and/or to an administrator computing device accessed by an owner or operator of the cluster of computing devices 508 to remove the identified number of computing devices from the cluster of computing devices 508. Accordingly, the cluster adjuster 526 may reduce the number of computing devices in the cluster of computing devices 508 that process applications and/or data and thus reduce the processing resource costs of processing applications at the cluster of computing devices 508.

In some implementations, when removing computing devices from the cluster of computing devices 508 (e.g., reducing the size of the cluster of computing devices 508), the cluster adjuster 526 may ensure the cluster of computing devices 508 retains the capacity of other metric types to process applications executing at the cluster of computing devices 508. For instance, responsive to determining to remove a computing device from the cluster of computing devices 508 to reduce the memory utilization of the cluster of computing devices 508, the cluster adjuster 526 may determine whether the cluster of computing devices has the capacity to satisfy the CPU utilization requirements of the cluster of computing devices 508 with the removal of the computing device. In one example, to do so, the cluster adjuster 526 may calculate a new CPU utilization capacity of the cluster of computing devices 508 with the computing device removed. If the CPU utilization capacity or a threshold proportional to the CPU utilization capacity of the cluster of computing devices becomes lower than the total CPU utilization capacity of the cluster of computing devices 508, the cluster adjuster 526 may determine not to remove the computing device from the cluster. Otherwise, the cluster adjuster 526 may determine to remove the computing device from the cluster of computing devices 508 and remove the computing device from the cluster of computing devices 508.

When determining whether to remove multiple computing devices from the cluster of computing devices, the cluster adjuster 526 may iteratively determine whether to remove individual computing devices from the cluster of computing devices 508. For instance, the cluster adjuster 526 may determine a number of computing devices to remove from the cluster of computing devices 508 to reduce the memory utilization capacity of the cluster of computing devices 508 as described above. The cluster adjuster 526 may then iteratively determine whether removing individual computing devices from the cluster would cause the CPU utilization capacity of the cluster or a threshold proportional to the CPU utilization capacity to be lower than the CPU utilization capacity that is required to execute the applications at the cluster of computing devices 508. The cluster adjuster 526 may calculate the effect of removing incremental numbers of computing devices from the cluster of computing devices 508. The cluster adjuster 526 may do so until the cluster adjuster 526 calculates the effect of removing all of the computing devices of the calculated number. In some cases, the cluster adjuster 526 may do so until determining removal of a subset of the calculated number would cause the cluster of computing devices 508 to have a CPU utilization capacity of the cluster or a threshold proportional to the CPU utilization capacity to be lower than the CPU utilization that is required to execute the applications at the cluster of computing devices 508. The cluster adjuster 526 may identify the subset or number of computing devices 508 that can be removed from the cluster of computing devices 508 without causing the CPU utilization capacity or a threshold proportional to the CPU utilization capacity of the cluster of computing devices 508 to go below the CPU utilization requirements of the applications executing on the cluster of computing devices 508. The cluster adjuster 526 may perform this iterative process similarly for any number of metric types, thus enabling the cluster adjuster 526 to reduce the size of the cluster of computing devices 508 without negatively impacting the processing of the cluster of computing devices 508.

In some implementations, the metric calculator 524 may determine whether to adjust the configuration of the cluster of computing devices 508 for deployment of an application to the cluster of computing devices 508 according to a set of rules. The rules may correspond to thresholds for one or a plurality of metrics and/or may be stored in the memory 520. For example, the metric calculator 524 may apply one or more rules to a plurality of metrics of a plurality of metric types for the cluster of computing devices 508 for deployment of a second application. One example of such a rule is to determine whether a combination of the memory utilization and the CPU utilization of the second application in combination with the current memory utilization and the CPU utilization of the cluster of computing devices 508 satisfies thresholds of a rule. The thresholds may be different for the combination rule (e.g., a rule with thresholds for multiple metric types) than individual rules (e.g., rules for one metric type) because adding an application with high memory utilization requirements may cause the cluster of computing devices 508 to have a lower CPU utilization capacity and/or vice versa. Accordingly, the thresholds may be a lower proportion (e.g., a percentage) of the total capacity of the cluster of computing devices 508 than the thresholds when evaluated individually. The metric calculator 524 may determine adding the second application to the cluster of computing devices 508 satisfies the rule responsive to the aggregate memory utilization and CPU utilization exceeding respective thresholds of the rule for the cluster of computing devices 508. Upon making this determination, the cluster adjuster 526 may add one or more computing devices to the cluster of computing devices 508 to cause the cluster to have the capacity to store and process the second application for both metrics. The cluster adjuster 526 may use similar rules to adjust the size of the cluster of computing devices for any number and/or type of metric.

In one example, the computing device 504 may be or include a deployment server (e.g., server running or executing the application deployment pipeline 706). The deployment server may be responsible for preparing and pushing new application versions to the cluster of computing devices 508 (and/or other clusters of computing devices). The computing device 504 may transmit the identification 532 of a new version of an application to the scaling server 502. The deployment server may transmit the identification 532 with configurations, memory utilization, and/or CPU utilization, in some cases among other metrics, of the new version of the application. The computing device 504 may transmit the identification 532 and/or other data regarding the new version of the application in a request "asking" for a calculation of cluster resources that are needed for the cluster of computing devices 508 to run the new version of the application. In response to receiving the request, the metric collector 522 may fetch or retrieve cluster performance and/or configuration metrics of the cluster of computing devices 508. The metric calculator 524 may use the metrics of the new version of the application and the fetched metrics of the cluster of computing devices 508 of the scaling server 502 to determine whether and/or how to scale the cluster of computing devices 508. The cluster adjuster may 526 may adjust the cluster of computing devices 508 based on the calculations by the metric calculator 524, and transmit a message back to the deployment server indicating the cluster of computing devices 508 has been adjusted and/or that the application can be deployed to the cluster of computing devices 508. The deployment server may receive the message and transmit the new version of the application to the cluster of computing devices 508 in response to receiving the message.

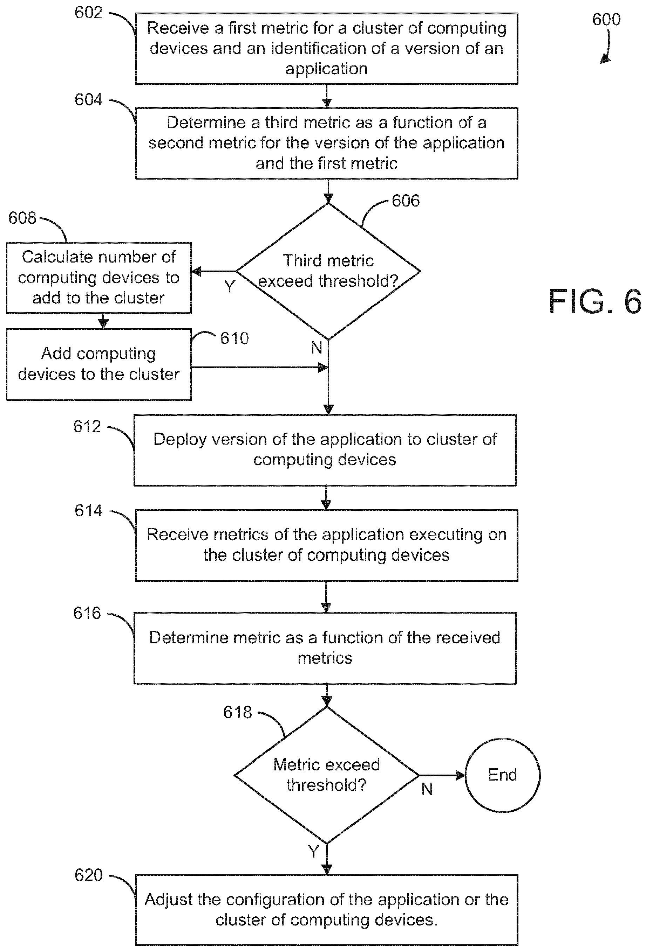

FIG. 6 is a flow diagram of a method for automatically scaling clusters or applications in a cloud environment, in accordance with an illustrative embodiment. The functionalities of method 600 may be implemented using, or performed by, a data processing system (e.g., the client 102, the server 106, the appliance 200, or the scaling server 502). In brief overview, the data processing system may receive a metric and an identification of a new version of an application to be deployed to a cluster of computing devices for processing (e.g., parallel processing). The data processing system may determine the cluster of computing devices does not have the necessary computing resources to store and process the new version of the application. Responsive to determining the cluster of computing devices does not have the necessary resources, the data processing system may add to or increase the size of the cluster of computing devices such that the cluster can support the new version of the application. The data processing system can then deploy the new application to the cluster of computing devices. The data processing system can monitor performance of the application and/or the cluster of computing devices as a whole. The data processing system can adjust the configuration of the application and/or the cluster of computing devices to improve or maintain performance of the application and/or the cluster of computing devices. Accordingly, the data processing system may proactively and continuously maintain the application and cluster to avoid processing errors and avoid degradation of the application and cluster over time.

At operation 602, in some implementations, the data processing system may receive or retrieve a first metric for a cluster of computing devices and an identification of a version of an application. The first metric may be a cluster metric such as a memory utilization or a CPU utilization of the cluster (e.g., a total amount of memory or CPU the cluster of computing devices is currently using). The data processing system may receive the first metric by requesting the first metric from the cluster of computing devices (e.g., requesting the first metric upon receipt of the identification of the application) and/or after the cluster of computing devices automatically transmits the first metric to the data processing system. The data processing system can receive the identification of the version of the application (e.g., an updated version of the application or a new application) from a computing device in communication with the data processing system and/or a module of the data processing system. In some implementations, the data processing system may receive one or more metrics for the new version of the application, such as the memory utilization or the CPU utilization the new version of the application will require to be executed and/or stored at the cluster of computing devices. In some implementations, the data processing system may determine the one or more metrics of the new version of the application such as by analyzing or locally executing the application with a monitoring application.

At operation 604, in some implementations, the data processing system may determine a third metric as a function of a second metric of the version of the application and the first metric of the cluster of computing devices. The third metric may be an aggregated, determined, or predicted metric that indicates the amount of resources the cluster of computing devices will utilize to store and execute the applications at the cluster of computing devices in combination with the new version of the application. The data processing system may determine the third metric by executing a function as an aggregation function, a linear function, a logarithmic function, an averaging function, or any other type of function. For example, the data processing system may execute an aggregation function by aggregating the memory utilization requirements of the new version of the application with the memory utilization requirements of storing and executing the current applications at the cluster of computing devices (e.g., the current application at the cluster of computing devices except, in instances in which the new version of the application is an updated version of a version of the application already stored at the cluster of computing devices, the old version of the application). In doing so, the data processing system may determine an aggregate or predicted memory utilization of the new version of the application in combination with the current memory utilization at the cluster of computing devices. The data processing system may similarly use an aggregation or any other function to determine an aggregate, predicted, or determined CPU utilization or any other metric.

At operation 606, in some implementations, the data processing system may determine whether the third metric exceeds a threshold. The threshold may be a capacity of the cluster of computing devices or a value proportional to the capacity of the cluster of computing devices. For example, the threshold may be a memory utilization capacity or a CPU utilization capacity of the cluster of computing devices or a percentage (e.g., a defined percentage, such as 50%, 80%, 90%, or 100%) of the memory utilization capacity or the CPU utilization capacity. The data processing system may determine whether the third metric exceeds the capacity or threshold for the memory utilization and/or CPU utilization of the cluster of computing devices by comparing the third metric with the corresponding threshold or capacity (e.g., compare the determined memory utilization with the threshold or capacity for memory utilization and/or the determined CPU utilization with the threshold or capacity for CPU utilization). Responsive to determining the third metric does not exceed the threshold or capacity for one or both of memory utilization and CPU utilization, at operation 612, the data processing system may deploy (e.g., transmit) the new version of the application to the cluster of computing devices.

However, responsive to determining the third metric (e.g., one or more both of the determined CPU utilization or memory utilization) exceeds a respective threshold, at operation 608, in some implementations, the data processing system may calculate a number of computing devices to add to the cluster of computing devices. The data processing system may calculate the number of computing devices to add to the cluster of computing devices based on the resource capacities of the computing devices. For example, the data processing system may store or receive the memory capacity and/or the CPU utilization capacity of a number of potential computing devices to add to the cluster of computing devices. The capacities may be common or different across the potential computing devices. The data processing system may also determine a difference between the third metric and the threshold or capacity of the cluster of computing devices for the respective metric (e.g., threshold or capacity for memory utilization and/or CPU utilization). The data processing system may identify a number and/or a subset of the potential computing devices with the memory capacity and/or CPU utilization capacity equal to or greater than the difference.

At operation 610, in some implementations, the data processing system may add the identified number and/or subset of potential computing devices to the cluster of computing devices. To do so, for example, the data processing system may transmit a message to the identified potential computing devices and/or an administrator computer accessed by an owner of the identification potential computing devices to add the potential computing devices to the cluster of computing devices. The computing devices may receive the message and establish connections with the cluster of computing devices. When the receiving computing devices are potential computing devices, in some cases, the potential computing devices may download the same applications that the cluster of computing devices currently store and execute.

At operation 612, in some implementations, the data processing system may deploy the version of the application to the cluster of computing devices. The data processing system may deploy the version of the application to the cluster of computing devices by transmitting (e.g., transmitting across a network) the version of the application to the cluster of computing devices. The computing devices of the cluster may receive the version of the application and download the version of the application in memory of each or a subset of the computing devices of the cluster. In cases in which the new version of the application replaces an old version of the same application, the computing devices may discard (e.g., remove) the old version of the application from memory, thus conserving memory resources and avoiding storage of stale and unused applications.

At operation 614, in some implementations, the data processing system may receive one or more metrics of the application executing on the cluster of computing devices. The metrics may be application metrics indicating how the application is performing at the cluster of computing devices. For example, the metrics may be failures, execution time, retries, used driver and executor memory, CPU utilization, etc. The data processing system may receive such metrics as values for the deployed application and/or any other applications executing at the cluster of computing devices. The data processing system may receive such metrics over time upon request (e.g., by polling computing devices of the cluster of computing devices) and/or at set intervals.

The data processing system may group and store the received metrics into sets of metrics for different time periods. For example, the data processing system may store a first set of metrics from metrics that were received or generated within a first time period (e.g., a historical time period, such as a time period beginning immediately after deployment of a version of an application to the cluster of computing devices) and a second set of metrics that were received or generated within a second time period (e.g., a time period subsequent to the first time period). The data processing system may determine the sets of metrics and store the sets of metrics in memory. The data processing system may have store the sets of metrics with identifications indicating the sets of which the individual metrics are a part.

At operation 616, in some implementations, the data processing system may determine a first metric for the application. The data processing system may calculate the first metric as a function of the second set of metrics collected for the application. The function may be an averaging function, a summation function, a linear function, a parabolic function, a logarithmic function, etc. For example, the data processing system may calculate an average of the second set of metrics collected for the application. The average may be, for example, an average latency, an average execution time, an average start-up time, etc. The data processing system may use any function to determine the first metric for the application. The data processing system may determine such first metrics for any number of application metrics.

At operation 618, in some implementations, the data processing system may determine if the determined metric exceeds a threshold. The threshold may be a defined value the data processing system stored in memory. In some implementations, the data processing system may determine the threshold based on a determined value from the first set of metrics. For example, the data processing system may calculate an average start-up time (or any other value determined using a function of the first set of metrics as described above) from the first set of metrics. The data processing system may add a defined value to the average start-up time from the first set of metrics to determine the threshold. The data processing system may compare the average start-up time of the second set of metrics as the first metric to the threshold. The data processing system may compare first metrics of any metric type to any number of similarly determined thresholds. Responsive to determining the first metric exceeds the threshold, the data processing system may determine to adjust the configuration of the cluster of computing devices or the application. Otherwise, the method 600 may end.

At operation 620, in some implementations, the data processing system may adjust the configuration of the application or the cluster of computing devices. In some implementations, the data processing system may first determine whether to adjust the configuration of the application or the cluster of computing devices. The data processing system may do so, for example, based on the metric type of the first metric that exceeds the threshold. For instance, different metric types may correspond to different methods of addressing issues that are causing errors with respective metrics types. When the data processing system determines a metric for start-up delays, failures, timeouts, or out-of-speed triggers of the application is above a corresponding threshold, the data processing system may determine to adjust (e.g., increase or decrease in size) the configuration of the cluster of computing devices. When the data processing system determines a metric for one of application failures, execution time, retries, used driver and executor memory, or CPU utilization exceeds a threshold, the data processing system may determine to adjust (e.g., increase or decrease the number or the memory allocations of the executors or drivers of the application) the configuration of the application. Upon determining to adjust the configuration of the application or the cluster of computing devices, the data processing system may perform the determined adjustment as described above.

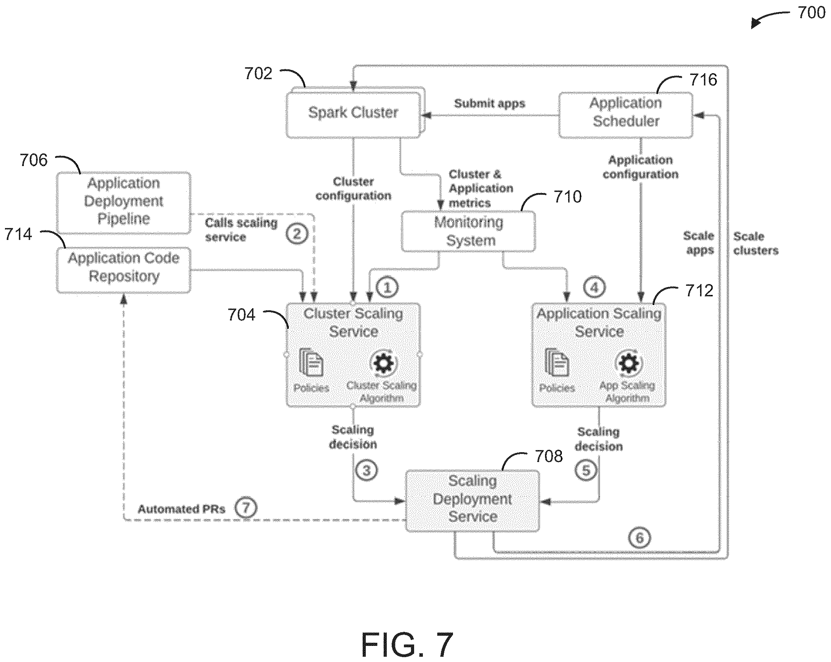

FIG. 7 is a block diagram of a system 700 for automatically scaling clusters or applications in a cloud environment, in accordance with an illustrative embodiment. The functionalities of system 700 may be implemented using, or performed by, a data processing system (e.g., the client 102, the server 106, the appliance 200, or the scaling server 502). The system 700 may include the same or similar components to the system 500. For example, a data processing system may be in communication with a cluster of computing devices 702. The data processing system may include a cluster scaling service 704, an application deployment pipeline 706, a scaling deployment service 708, a monitoring system 710, application scaling service 712, an application code repository 714, and an application scheduler 716. Each of the components 704-716 may be a server of the data processing system or a set of executable instructions executable by the data processing system to operate to determine and/or implement cluster and/or application scaling decisions for the cluster of computing devices 702 and/or applications executing on the cluster of computing devices 702.

The data processing system may operate to scale the cluster of computing devices 702. For example, the monitoring system 710 may periodically collect inputs and/or signals from the cluster of computing devices 702. The inputs and/or signals may include metrics of the cluster of computing devices 702, such as the current cluster size and configuration. The monitoring system 710 may collect the inputs and/or signals through one or more APIs that communicate with the cluster of computing devices 702. The monitoring system 710 may receive the metrics and store or maintain the received metrics. The monitoring system 710 may transmit the metrics to the cluster scaling service 704 to use to calculate a needed cluster size and/or a number of computing devices to add to the cluster of computing devices 702 to store and/or process a new version of an application.

The cluster scaling service 704 may receive an identification of a new version of an application and/or the new version of the application itself from the application deployment pipeline 706. In some cases, the cluster scaling service may also receive or determine (e.g., determine by executing the new version of the application and monitoring the new version during execution) one or more metrics of the new version of the application. The cluster scaling service 704 may combine (e.g., aggregate or execute another function) the one or more metrics of the new version of the application with metrics of the same type from the cluster of computing devices. The cluster scaling service 704 may determine a size (e.g., a number of computing devices, a memory utilization capacity, a CPU utilization capacity, or another metric of the cluster of computing devices) of the cluster of computing devices 702 that can store or handle the new version of the application. The cluster scaling service 704 may compare the determined size with the current size. Responsive to determining the determined size exceeds the current size, the cluster scaling service 704 may determine to increase the size of the cluster of computing devices 702. The cluster scaling service 704 may transmit a message to the scaling deployment service 708 with a scaling decision indicating to increase the size of the cluster of computing devices 702.

The scaling deployment service 708 may receive the message with the scaling decision and apply the scaling decision to adjust the configuration of the cluster of computing devices 702. The scaling deployment service 708 may apply the changes through cloud-specific cluster management APIs, using terraform templates, or using a Kubernetes API (e.g., for a Kubernetes-based cluster).

The data processing system may additionally or instead operate to change the configurations of applications executing at the cluster of computing devices 702. For example, the monitoring system 710 may periodically collect inputs and/or signals from the application scheduler 716 and/or applications executing at the cluster of computing devices 702. The application scaling service 712 may compare recent application metrics with historical application metrics (e.g., compare averages or other determined values of metrics of a historical time period with averages or other determined values of metrics of a time period subsequent to the historical time period). The application scaling service 712 may determine an application is experiencing an anomaly if the determined value for the recent application metrics is different from a determined value of the historical application metrics above a threshold. The application scaling service 712 may determine a scaling decision indicating whether to allocate more executors or drivers or memory for executors or drivers of the application responsive to detecting the anomalous behavior of the application.

The application scaling service 712 may determine whether to allocate more executors or drivers or memory for executors or drivers of the application based on the metric type of the metric that is experiencing anomalous behavior compared to historical data and/or the size of the anomaly (e.g., a size of the difference compared to the historical data). The application scaling service 712 may do so, for example, by generating and/or storing a look-up table with scaling decisions that correspond to different metric types and/or differences between recent and historical data. The scaling decisions may indicate whether to allocate more executors or drivers or memory for executors or drivers of the application and/or the extent of doing so (e.g., the number or amount of executors or drivers and/or executor or driver memory to allocate). The application scaling service may transmit the scaling decision to the scaling deployment service 708.

The scaling deployment service 708 may deploy the scaling decision for the application by transmitting the scaling decision to the application scheduler 716. The application scheduler 716 may communicate with the cluster of computing devices 702 by transmitting a message to change the configuration of the application in accordance with the scaling decision to the cluster of computing devices. In some implementations, the application scheduler 716 may communicate with the cluster of computing devices 702 by transmitting an updated version of the application in accordance with the scaling decision to the cluster of computing devices. The application scheduler 716 may communicate with the cluster of computing devices 702 via scheduler management APIs (e.g., Data Factory REST APIs). The scaling deployment service 708 may additionally or instead ensure changes to the application persist (e.g., persist across new updated versions of the same application) by transmitting code of the application with the corresponding changes in configuration to the application code repository 714.

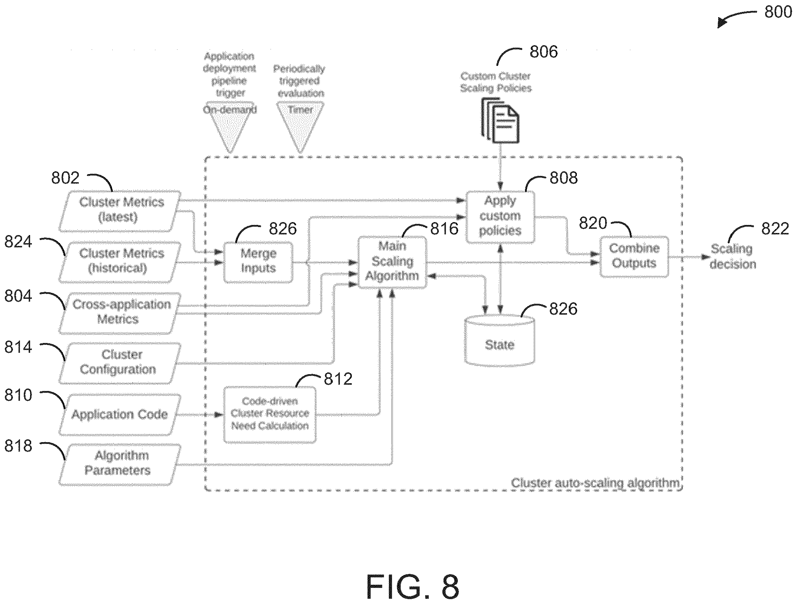

FIG. 8 is a sequence diagram of a sequence 800 for automatically scaling clusters in a cloud environment, in accordance with an illustrative embodiment. The functionalities of the system executing the sequence 800 may be implemented using, or performed by, a data processing system (e.g., the client 102, the server 106, the appliance 200, or the scaling server 502). The data processing system may implement the sequence 800 on a periodic basis, and/or on an on-demand basis by an application deployment pipeline.

In the sequence 800, the data processing system may make a scaling decision based on a new version of an application from the application deployment pipeline. In doing so, a set of cluster metrics 802 from a recent time period and/or a set of cross-application metrics 804 from the same time period may be analyzed using a set of custom policies 806 (e.g., policies that indicate a capacity or threshold amount of computer resources a cluster of computing devices can handle before experiencing errors or not being able to perform at expected levels) at operation 808. Application code 810 of the new version of the application from the application deployment pipe may be analyzed or monitored to determine the application resource utilization requirements 812 (e.g., the memory utilization and/or the CPU utilization requirements) of storing and/or executing the new version of the application at the cluster of computing devices. The data processing system may apply a scaling algorithm 816 to the application resource utilization requirements 812 and a cluster configuration 814. In doing so, the data processing system may apply algorithm parameters 818 to the application resource utilization requirements 812 and the cluster configuration 814 to determine the resource requirements of executing the new version of the application at the cluster of computing devices with the other applications the cluster of computing devices currently stores and/or executes. At operation 820, the data processing system may combine the output from the scaling algorithm 816 and the application of the custom policies to the set of cluster metrics 802 to generate a scaling decision 822. The data processing system may store the current and/or any updated states of the cluster of computing devices in memory as a state 826.

The data processing system may additionally or instead scale the cluster of computing devices based on a current performance of the cluster of computing devices compared to a previous performance. For example, the data processing system may combine (e.g., compare, concatenate, or otherwise merge into a single file) the set of metrics 802 with the historical set of metrics 824 at operation 820. The data processing system may execute the scaling algorithm 816 with the combined output to determine if a value calculated from the set of metrics 802 (e.g., an average, sum, or any other determined or calculated value from the set of metrics) exceeds or is different from a similarly determined or calculated value from the historical set of metrics 824 (e.g., is different above a threshold). Responsive to determining the determined values between the two sets of metrics are different above a threshold, the data processing system may generate the scaling decision 822 to address any issues that may be causing the differences. The data processing system may store the current and/or any updated states (e.g., the current configuration) of the cluster of computing devices in memory as the state 826.

Performing the sequence 800 offers several advantages. The evaluation may be triggered on a periodic basis, as well as on-demand by the application deployment pipeline. When triggered by the deployment pipelines, the data processing system may load the application artifact and access the application configuration. The data processing system may calculate the cluster resource requirements based on a difference between a historical or previous state and the current state of the cluster of computing devices (new applications, canaried applications, historical backfilling schedules, etc.). The reference or historical metric period can be configurable and may define the baseline cluster performance (e.g. average Yarn memory utilization over the last 1 week). The main cluster scaling algorithm may include of a series of rules and heuristics, which may be driven by the Spark and Hadoop best practices. Custom policies can override or "strengthen" the main algorithm output. Outputs and metadata may be persisted in a state for retrofitting the algorithm and enabling the action cool down.

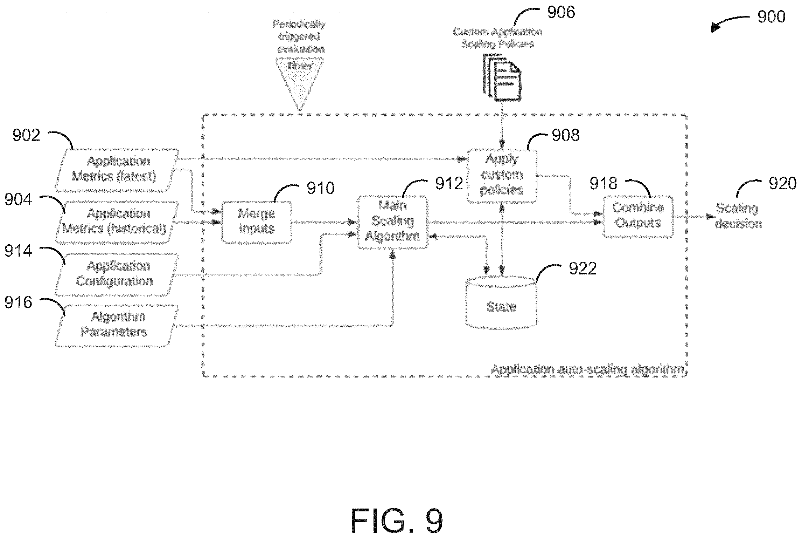

FIG. 9 is a sequence diagram of a sequence 900 for automatically scaling applications in a cloud environment, in accordance with an illustrative embodiment. The functionalities of the system executing sequence 900 may be implemented using, or performed by, a data processing system (e.g., the client 102, the server 106, the appliance 200, or the scaling server 502). The data processing system may implement the sequence 900 on a periodic basis.

In the sequence 900, the data processing system may make a scaling decision for an application that has already been deployed at the cluster of computing devices. In doing so, a recent set of application metrics 902 from a recent time period and/or a historical set of application metrics 904 from a time period prior to the time period in which the recent set of application metrics 902 were collected or generated. The data processing system may analyze the recent set of application metrics 902 using a set of custom policies 906 (e.g., policies that indicate a maximum capacity or threshold for various metrics, such as a maximum execution time of application before the application needs to be reconfigured) at operation 908. The recent set of application metrics 902 and the historical set of application metrics 904 may merge (e.g., be combined into a single file or message or concatenated together) at operation 910. The data processing system may also input a current application configuration 914 (e.g., number of executors or drivers and/or memory allocated to such executors or drivers for the application) into the scaling algorithm. The data processing system may execute algorithm parameters 916 with the scaling algorithm 912 and inputs to determine if a value calculated from the recent set of application metrics 902 (e.g., an average, sum, or any other determined or calculated value from the recent set of application metrics 902) exceeds or is different from a similarly determined or calculated value from the historical set of application metrics 904 (e.g., exceeds or is different above a threshold). Responsive to determining the determined values between the two sets of metrics 902 and 904 are different above a threshold, the data processing system may output an indication that the application needs to be reconfigured. At operation 918, the data processing system may combine the output from the scaling algorithm 912 and the application of the custom policies 906 at the operation 908 to the recent set of cluster metrics 802 to generate a scaling decision 920. The data processing system may store the current and/or any updated states of the application in memory as the state 922.

The reference metric period (e.g., the determined value from the historical set of application metrics 904) can be configurable and may define the baseline application performance (e.g. average memory utilization over the last 1 week's runs). The main application scaling algorithm may include a series of rules and heuristics, driven by the Spark and JVM best practices. Custom policies can override or "strengthen" the main algorithm output. Outputs and metadata may persist in a state for retrofitting the algorithm and to enable the action cool down. The algorithm outputs may be forwarded to the scaling deployment service, which may apply the configuration leveraging the appropriate (configured) cluster management, scheduler API, or Terraform template. In case of application scale change, in order to keep the code and the scheduler configuration in sync, an automated code change and PR may be created.

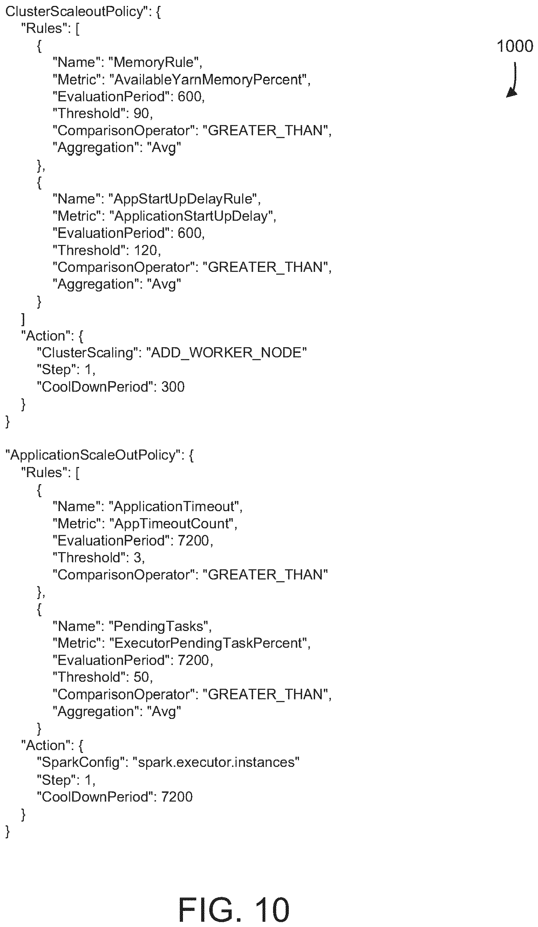

FIG. 10 is example code 1000 of a cluster scale-out policy and an application scale-out policy, in accordance with an illustrative embodiment. The code 1000 may include example rules and/or actions to be performed if the rules are to be satisfied for cluster and/or application scaling.

Accordingly, the systems and methods discussed herein provide for automatic scaling of applications and clusters of computing devices prior and subsequent to deploying the applications. A scaling server may determine a cluster of computing devices has the computing resources (e.g., memory utilization and CPU utilization) to receive and process data for a new version of an application. The scaling server may automatically adjust the size of the cluster of computing devices to ensure the cluster of computing devices has the requisite computing resources to minimize any errors and/or issues that deploying the application to the cluster of computing devices may cause. Upon deploying the application to the cluster of computing devices, the scaling server may monitor performance of the application and the cluster of computing devices itself to identify any anomalous behavior compared to previous behavior. Such anomalies may indicate an error in the application and/or the cluster of computing devices. The scaling server may determine how to address any such anomalies and reconfigure the application and/or the cluster of computing devices in real-time to address the anomalies. Accordingly, the scaling server may improve and/or maintain performance of the cluster of computing devices over time. The proactive cluster resource calculation capability can apply in cases of new cluster deployments, periodic cluster deployments (e.g. for periodic workloads like nightly model trainings) or in cases of any type of application deployments.

Various elements, which are described herein in the context of one or more embodiments, may be provided separately or in any suitable subcombination. For example, the processes described herein may be implemented in hardware, software, or a combination thereof. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein. Terms such as "first" and "second" are not intended to imply any particular order unless otherwise noted, and are primarily used to distinguish items from each other - e.g. a second item may temporally occur prior to a first item.

It will be further understood that various changes in the details, materials, and arrangements of the parts that have been described and illustrated herein may be made by those skilled in the art without departing from the scope of the following claims.

## Claims

1. A method, comprising:
receiving, by a processor, a first metric of a first metric type for a cluster of computing devices and an identification of a version of an application;
determining, by the processor, a third metric as a function of a second metric of the first metric type for the version of the application and the first metric for the cluster of computing devices;
determining, by the processor, the third metric exceeds a threshold for the first metric type for the cluster of computing devices, the threshold proportional to a capacity of the cluster of computing devices for the first metric type; and
responsive to the determination, increasing, by the processor, a size of the cluster of computing devices.

2. The method of claim 1, wherein increasing the size of the cluster comprises increasing, by the processor, the size of the cluster such that the threshold of the cluster of computing devices is at least equal to the third metric.

3. The method of claim 1, further comprising:
calculating, by the processor, a difference between the third metric and the threshold;
and
calculating, by the processor, a number of computing devices to add to the cluster of computing devices based on the difference,
wherein increasing the size of the cluster comprises adding, by the processor, the calculated number of computing devices to the cluster.

4. The method of claim 1, further comprising:
responsive to increasing the size of the cluster, deploying, by the processor, the version of the application to each computing device of the cluster of computing devices, receipt of the version of the application causing each computing device of the cluster to download the version of the application.

5. The method of claim 1, wherein obtaining the first metric of the first metric type for the cluster of computing devices comprises receiving, by the processor, a value of memory utilization or a value of central processing unit (CPU) utilization of the cluster of computing devices.

6. The method of claim 1, further comprises:
receiving, by the processor, a plurality of metrics of the first metric type or a second metric type for the cluster of computing devices;
calculating, by the processor, an average of the plurality of metrics;
determining, by the processor, the average of the plurality of metrics exceeds a second threshold for the first metric type or the second metric type; and
responsive to determining the average exceeds the second threshold, increasing, by the processor, the size of the cluster of computing devices.

7. The method of claim 6, further comprising:
receiving, by the processor, a second plurality of metrics for the first metric type or the second metric type for the cluster of computing devices for a second time period prior to a time period associated with the plurality of metrics; and
calculating, by the processor, the second threshold based on the metrics of the second plurality of metrics.

8. The method of claim 1, further comprising:
receiving, by the processor, a plurality of metrics of a second metric type corresponding to the application executing on the cluster of computing devices;
calculating, by the processor, an average of the plurality of metrics;
determining, by the processor, the average exceeds a second threshold for the second metric type; and
responsive to determining the average exceeds the second threshold, increasing, by the processor, the size of the cluster of computing devices.

9. The method of claim 8, wherein receiving the plurality of metrics of the second metric type corresponding to the application comprises receiving, by the processor, metrics for one of start-up delays, failures, timeouts, or out of speed triggers of the application executing on the cluster of computing devices.

10. The method of claim 1, further comprising:
receiving, by the processor, a plurality of metrics of a second metric type corresponding to the application executing on the cluster of computing devices;
calculating, by the processor, an average of the plurality of metrics;
determining, by the processor, the average exceeds a second threshold for the second metric type;
responsive to determining the average exceeds the second threshold, adjusting, by the processor, a configuration of the application;
wherein adjusting the configuration of the application comprises increasing or decreasing, by the processor, a driver or executor memory allocation of the application at each computing device of the cluster of computing devices.

11. The method of claim 10, further comprising determining, by the processor, to adjust the configuration of the application instead of adjusting the size of the cluster of computing devices based on the second metric type.

12. The method of claim 1, further comprising:
receiving, by a processor, a plurality of metrics of a plurality of metric types for the cluster of computing devices and a second identification of a second version of a second application;
applying, by the processor, one or more rules to the plurality of metrics;
determining, by the processor, to increase the size of the cluster of computing devices based on the plurality of metrics satisfying at least one rule of the one or more rules; and
increasing, by the processor, the size of the cluster responsive to determining to increase the size of the cluster.

13. The method of claim 1, further comprising:
receiving, by the processor, a plurality of metrics of the first metric type or a second metric type for the cluster of computing devices;
calculating, by the processor, an average of the plurality of metrics;
determining, by the processor, the average of the plurality of metrics is less than a second threshold for the first metric type or the second metric type; and
responsive to determining the average exceeds the threshold, decreasing, by the processor, the size of the cluster of computing devices.

14. A system, comprising:
a computing device comprising a processor coupled to memory and a network interface, the processor configured to:
receive a metric of a first metric type for a cluster of computing devices and an identification of a version of an application;
determine a third metric as a function of the first metric of the first metric type and a second metric of the version of the application;
determine the third metric exceeds a threshold for the first metric type for the cluster of computing devices, the threshold proportional to a capacity of the cluster of computing devices for the first metric type; and
responsive to the determination, increase a size of the cluster of computing devices.

15. The system of claim 14, wherein the processor is further configured to:
calculate a difference between the third metric and the threshold; and
calculate a number of computing devices to add to the cluster of computing devices based on the difference,
wherein the processor is configured to increase the size of the cluster by adding the calculated number of computing devices to the cluster.
